# EUROPÄISCHE PATENTANMELDUNG

(11) **EP 3 744 561 A1**
(43) Veröffentlichungstag der Anmeldung: **02.12.2020**
(21) Anmeldenummer: 20174002.4
(22) Anmeldetag: 12.05.2020
(51) Int. Cl.: B60L 53/14, B60L 53/31, H01R 13/73

(54) **LADEVORRICHTUNG FÜR ELEKTROFAHRZEUGE**

(30) Priorität: 31.05.2019 DE 102019114649
(71) Anmelder: Innogy eMobility Solutions GmbH, 44139 Dortmund (DE)
(72) Erfinder: Helnerus, Stefan, 59821 Arnsberg (DE); Müller-Winterberg, Christian, 46282 Dorsten (DE)
(74) Vertreter: Cohausz & Florack

(57) **Zusammenfassung**

Die Anmeldung betrifft eine Ladevorrichtung (3) zum Laden von Elektrofahrzeugen, umfassend mindestens eine Dockingstation (4), mindestens eine an der Dockingstation (4) befestigbare Ladeeinheit (6), mindestens einen Verriegelungsmechanismus eingerichtet zum Befestigen der Ladeeinheit (6) an der Dockingstation (4) durch Bewegen eines Verriegelungsmoduls (5) von einer geöffneten Position in eine Verriegelungsposition, derart, dass die Ladeeinheit (6) in der Verriegelungsposition an der Dockingstation (4) arretiert ist, wobei das Verriegelungsmodul (5) zum Bewegen des Verriegelungsmoduls einen außerhalb der Dockingstation (4) und der Ladeeinheit (6) befindlichen Teilbereich (11) aufweist, und mindestens ein Schutzgehäuse (69) eingerichtet zum Verdecken zumindest des Teilbereichs (11) des Verriegelungsmoduls (5) in einem befestigten Zustand des Schutzgehäuses (69).

## Beschreibung

Die Anmeldung betrifft eine Ladevorrichtung für Elektrofahrzeuge mit einer an einer Dockingstation befestigbaren Ladeeinheit. Darüber hinaus betrifft die Anmeldung eine Ladeanordnung mit einer Ladevorrichtung.

Der Aufbau der Ladeinfrastruktur ist von entscheidender Bedeutung für die flächendeckende Etablierung von Elektromobilität. Dazu ist es insbesondere notwendig, in öffentlichen, teilöffentlichen als auch in privaten Räumen Ladestationen bzw. Ladeanordnungen mit Ladevorrichtungen zum Laden von Elektrofahrzeugen in großem Maße zu installieren. Die Ladevorrichtungen verfügen über integrierte oder anschließbare Ladeelektronik zum Laden eines Elektrofahrzeugs.

Unter einem Elektrofahrzeug ist vorliegend ein Fahrzeug zu verstehen, das zumindest teilweise elektrisch betrieben werden kann und einen wiederaufladbaren elektrischen Speicher umfasst.

Wie erwähnt, ist der umfangreiche Ausbau der Ladeinfrastruktur ein wesentlicher Faktor für die Akzeptanz der Elektromobilität. Daher müssen Ladestationen möglichst flächendeckend und in großer Anzahl in kurzer Zeit installiert werden. Dies ist hinsichtlich der Konzeption, dem Bau und dem tatsächlichen Installieren vor Ort der Ladestation eine Herausforderung, da durch den massenhaften Einsatz der Ladestationen diese im industriellen Maßstab herstellbar sein müssen und besonders einfach, bevorzugt durch eine einzige Person, vor Ort installierbar sein sollten.

Dies ist bei bisherigen Ladeanordnungen nur bedingt der Fall. Zum einen ist die Montage vor Ort komplex und aufwendig. Zum anderen kann die Elektronik in den Ladevorrichtungen bisher nicht kostengünstig und in großen Stückzahlen produziert werden. Zudem sind in der Regel eine Vielzahl von manuellen, insbesondere komplexen Handgriffen, erforderlich, für die normalerweise ein Fachmann heranzuziehen ist. Entsprechendes gilt für Wartungsarbeiten und/oder den Austausch von Ladetechnik, welche/r beispielsweise durch Defekte oder Technologiewechsel erforderlich wird/werden.

Ferner verschaffen sich beim Stand der Technik immer wieder unberechtigte Personen Zugriff auf die Ladestationen, um diese zu manipulieren und/oder Bauteile aus der Ladestation zu entfernen, also zu entwenden.

Daher liegt der Anmeldung die Aufgabe zugrunde, eine Ladevorrichtung zum Laden von Elektrofahrzeugen zur Verfügung zu stellen, welche die Installation und Wartung einer Ladeanordnung vereinfacht und einen Zugriff auf die Ladevorrichtung durch Unbefugte zumindest erschwert.

Die Aufgabe wird gemäß einem ersten Aspekt der Anmeldung durch eine Ladevorrichtung zum Laden von Elektrofahrzeugen nach Anspruch 1 gelöst. Die Ladevorrichtung umfasst mindestens eine Dockingstation. Die Ladevorrichtung umfasst mindestens eine an der Dockingstation befestigbare Ladeeinheit. Die Ladevorrichtung umfasst mindestens einen Verriegelungsmechanismus eingerichtet zum Befestigen der Ladeeinheit an der Dockingstation durch Bewegen eines Verriegelungsmoduls von einer geöffneten Position in eine Verriegelungsposition, derart, dass die Ladeeinheit in der Verriegelungsposition an der Dockingstation arretiert ist. Das Verriegelungsmodul weist zum Bewegen des Verriegelungsmoduls einen außerhalb der Dockingstation und der Ladeeinheit befindlichen Teilbereich auf. Die Ladevorrichtung umfasst mindestens ein Schutzgehäuse eingerichtet zum Verdecken zumindest des Teilbereichs des Verriegelungsmoduls in einem befestigten Zustand des Schutzgehäuses.

Im Gegensatz zum Stand der Technik wird anmeldungsgemäß eine einfach zu installierende Ladevorrichtung für eine Ladeanordnung bereitgestellt, indem die Ladevorrichtung modulartig aus einer Dockingstation und einer daran befestigbaren Ladeeinheit gebildet ist. Hierbei ermöglicht der anmeldungsgemäße Verriegelungsmechanismus eine Befestigung der Ladeeinheit an der Dockingstation in einfacher Weise. Insbesondere kann die Ladeeinheit mit wenigen Handgriffen und auch von Ungeübten an einer Dockingstation installiert werden, indem ein Verriegelungsmodul von einer geöffneten Position in eine Verriegelungsposition bewegt wird.

Um einen Zugriff auf die Ladevorrichtung nach einer Arretierung der Ladeeinheit an der Dockingstation zumindest zu erschweren, ist anmeldungsgemäß im Gegensatz zum Stand der Technik vorgesehen, dass zumindest der Teilbereich des Verriegelungsmoduls, welcher auch nach einer Arretierung der Ladeeinheit an der Dockingstation durch einen Nutzer (frei) zugreifbar ist, von einem Schutzgehäuse verdeckt ist (zumindest im bestimmungsgemäßen Betrieb der Ladevorrichtung).

Ferner ist der Anschluss an die Energieversorgung insbesondere von der sonstigen Ladetechnik entkoppelt, indem eine getrennt von der Ladeeinheit ausgebildete Dockingstation bereitgestellt wird, so dass gewährleistet werden kann, dass auch Laien Ladetechnik installieren können. Auch die mögliche Wartung sowie der Austausch von in der Ladeeinheit installierter Ladetechnik, welcher beispielsweise durch Defekte oder Technologiewechsel erforderlich wird, sind bei der anmeldungsgemäßen Ladevorrichtung vereinfacht möglich.

Die Ladevorrichtung ist zum Austauschen elektrischer Energie mit Elektrofahrzeugen eingerichtet und kann im bestimmungsgemäßen Gebrauch insbesondere in einer Ladeanordnung bzw. Ladestation installiert sein und/oder diese bilden.

Eine anmeldungsgemäße Ladevorrichtung umfasst eine Dockingstation und eine Ladeeinheit. Die Dockingstation ist insbesondere als Anschlussebene ausgebildet. Die Ladeeinheit ist insbesondere als Versorgungsebene gebildet und kann vorzugsweise auf der Dockingstation aufgesetzt werden.

Die Ladeeinheit kann ein Gehäuse umfassen, in dem die Ladetechnik der Ladeeinheit integriert sein kann. Das Gehäuse kann vorzugsweise durch eine Wannenbaugruppe und eine mit der Wannenbaugruppe verbindbare Deckelbaugruppe gebildet sein. Der Anschluss der Ladetechnik an eine Energieversorgung erfolgt in der Art eines modularen Systems durch Montage bzw. Befestigung der Ladeeinheit an einer Dockingstation. Diese Montage erfolgt bevorzugt werkzeuglos mittels des anmeldungsgemäßen Verriegelungsmechanismus, umfassend das Verriegelungsmodul.

Insbesondere kann das Verriegelungsmodul des Verriegelungsmechanismus von einer geöffneten Position in die Verriegelungsposition bewegt werden, in der die Ladeeinheit an der Dockingstation arretiert ist. Zum Lösen der Ladeeinheit kann das Verriegelungsmodul von der Verriegelungsposition in die geöffnete Position bewegt werden.

Um die Ladeeinheit an der Dockingstation zu befestigen, kann die Dockingstation, gemäß einer bevorzugten Ausführungsform, eine Mehrzahl von Ausnehmungen, insbesondere in der Dockingstation vorgesehenen Öffnungen, aufweisen. Die Ladeeinheit kann vorzugsweise eine Mehrzahl von zu den Ausnehmungen korrespondierenden Stegen aufweisen. Unter korrespondierend ist vorliegend insbesondere zu verstehen, dass die Stege derart geformt und/oder an der Ladeeinheit positioniert sind, dass sie in die Ausnehmungen (für eine Befestigung) der Dockingstation eingeführt bzw. eingesetzt werden können.

Für eine (dauerhafte) Arretierung der Ladeeinheit an der Dockingstation ist insbesondere das Verriegelungsmodul vorgesehen, welches zumindest zwischen einer geöffneten Position und einer Verriegelungsposition bewegbar ist. Insbesondere kann, gemäß einer bevorzugten Ausführungsform, das Verriegelungsmodul mit den Stegen derart zusammenwirken, dass diese in der geöffneten Position in die Ausnehmungen der Dockingstation bis in eine Verrastposition, in der Regel eine Endposition, einführbar sind und durch Bewegen des Verriegelungsmoduls in die Verriegelungsposition an der Dockingstation formschlüssig fixiert werden können.

Zur Fixierung kann, gemäß einer weiteren Ausführungsform, insbesondere jeder Steg über ein erstes Verriegelungselement und das Verriegelungsmodul über eine entsprechende Mehrzahl von zweiten Verriegelungselementen verfügen, die jeweils zu dem jeweiligen ersten Verriegelungselement korrespondieren. Unter korrespondierend ist vorliegend insbesondere zu verstehen, dass die ersten und zweiten Verriegelungselemente derart geformt sind, dass in der geöffneten Position die an den Stegen angeordneten Verriegelungselemente in die Ausnehmungen der Dockingstation bis zum Erreichen der Verrastposition einführbar sind und mit den zweiten Verriegelungselementen derart zusammenwirken, dass in der Verrastposition ein Bewegen des Verriegelungsmoduls in die Verriegelungsposition möglich ist und in dieser Verriegelungsposition eine Fixierung der Stege erfolgt. Vorzugsweise kann ein erstes Verriegelungselement mit einem entsprechenden zweiten Verriegelungselement in der Verriegelungsposition miteinander verrastet sein.

Insbesondere können die ersten Verriegelungselemente mit den zweiten Verriegelungselementen derart zusammenwirken, dass die Stege formschlüssig an der Dockingstation fixierbar sind. Anders ausgedrückt wird eine Bewegung der Stege aus den Ausnehmungen der Dockingstation in der Verriegelungsposition durch die Zusammenwirkung der Verriegelungselemente blockiert, so dass insbesondere die Ladeeinheit an der Dockingstation befestigt bzw. arretiert ist. Mit anderen Worten kann durch die Arretierung der Ladeeinheit an der Dockingstation eine Ladevorrichtung im montierten Zustand hergestellt werden.

Um das Verriegelungsmodul zwischen der geöffneten Position und der Verriegelungsposition bewegen zu können, weist das Verriegelungsmodul einen auch im arretierten Zustand der Ladevorrichtung zugänglichen Teilbereich auf, insbesondere ein Griffbereich. Im monierten bzw. arretierten Zustand der Ladevorrichtung, also wenn das Verriegelungsmodul in der Verriegelungsposition ist, kann im Wesentlichen nur der Griffbereich sichtbar sein bzw. durch einen Nutzer zugreifbar sein. Die weiteren Abschnitte des Verriegelungsmoduls können innerhalb der Ladevorrichtung angeordnet sein, vorzugsweise in der Dockingstation integriert sein.

Um zu verhindern, dass Unbefugte das Verriegelungsmodul durch Bewegen des genannten Teilbereichs, insbesondere des Griffbereichs, von der Verriegelungsposition in die geöffneten Position verschoben wird und beispielsweise die Ladeeinheit in unberechtigter Weise entwendet werden kann, wird anmeldungsgemäß vorgeschlagen, zumindest den außerhalb der Dockingstation und der Ladeeinheit befindlichen Teilbereich, insbesondere den Griffbereich, durch ein Schutzgehäuse (vollständig) abzudecken bzw. zu verdecken.

Hierunter ist insbesondere zu verstehen, dass im befestigten Zustand des Schutzgehäuses ein Zugriff auf den außerhalb der Ladeeinheit und der Dockingstation befindlichen Teilbereich des Verriegelungsmoduls verhindert wird. Der Zugriff auf diesen Teilbereich ist bei einem (an der Ladeeinheit und/oder der Dockingstation) befestigten Schutzgehäuse blockiert. Befestigt meint hierbei, dass zwischen Ladeeinheit und/oder Dockingstation sowie dem Schutzgehäuse keine Auslassung besteht, durch die ein Nutzer (mit z.B. seiner Hand) auf den genannten Teilbereich zugreifen kann. Beispielsweise kann das Schutzgehäuse den genannten Teilbereich vollständig umschließen oder mit mindestens einem weiteren Bauteil, wie einem Trägerelement (z.B. eine Wand, an dem die Ladevorrichtung montiert werden kann) und/oder einem Sperrteil, zusammenwirken, um zumindest im bestimmungsgemäß Gebrauch der Ladevorrichtung den genannten Teilbereich vollständig zu verdecken.

Wie bereits beschrieben wurde, kann die Ladeeinheit vorzugsweise eine Wannenbaugruppe und eine Deckelbaugruppe umfassen. In der Wannenbaugruppe kann zumindest ein Leistungsmodul angeordnet sein. Das Leistungsmodul, auch HPS (High Power Safety) Modul genannt, umfasst insbesondere Komponenten, die zur Leistungssteuerung und Leistungsüberwachung notwendig sind.

Innerhalb der Wannenbaugruppe kann darüber hinaus eine erste Ladesteuerschaltung als auch ein Ladeauslass angeordnet sein. Die in der Wannenbaugruppe angeordneten Komponenten können ausreichend sein, Basisfunktionalitäten zum Laden eines Elektrofahrzeugs zur Verfügung zu stellen.

Die Wannenbaugruppe umfasst vorzugsweise einen Boden, welcher im montierten Zustand der Ladevorrichtung einem Schutzgehäusedeckel der Dockingstation zugewandt sein kann. Die dem Boden gegenüberliegende Seite der Wannenbaugruppe wird bevorzugt durch die Deckelbaugruppe im Wesentlichen verschlossen.

Die Deckelbaugruppe dient insbesondere zur Aufnahme von zumindest einem Kommunikationsmodul und zumindest einem Benutzerschnittstellenmodul. Mit Hilfe des Kommunikationsmoduls lassen sich beispielsweise die Ladefunktionen des Leistungsmoduls erweitern und insbesondere erweiterte Protokollfunktionalitäten implementieren. Ein Benutzerschnittstellenmodul ermöglicht es insbesondere, eine Interaktion mit einem Benutzer zu realisieren. Das Leistungsmodul ist bevorzugt eingerichtet, für ein Kommunikationsmodul und/oder ein Benutzerschnittstellenmodul eine Energieversorgung zur Verfügung zu stellen.

Das Kommunikationsmodul kann optional mit einem innerhalb der Dockingstation angeordneten Weitverkehrsnetzanschluss verbunden sein. Auch kann das Kommunikationsmodul optional mit einem Anschluss an ein Ladenetz innerhalb der Dockingstation verbunden sein. Auch kann das Kommunikationsmodul eine Kommunikation in einem Nahfeld (z.B. Bluetooth, WLAN (Wireless Local Area Network) etc.) etablieren.

Das Kommunikationsmodul, auch ECU (Electronic Control Unit) Modul genannt, kann als Steuerrechner und Kommunikationsgateway fungieren.

Das Benutzerschnittstellenmodul, auch UIB (User Interface Board) Modul genannt, umfasst insbesondere Bedien- und/oder Anzeigeelemente, beispielsweise jeweils zumindest ein Display, ein Touch-Display, ein Piktogramm, einen kapazitiven/induktiven Tastsensor und/oder einen Umgebungssensor. Diese können von dem UIB angesteuert und/oder ausgelesen werden. Das UIB kann innerhalb der Ladeinheit modular an das ECU-Modul angeschlossen werden, wobei ein UIB in einer Grundfunktion ausschließlich Status-LEDs zur Anzeige des Betriebszustandes als Anzeigeelement aufweisen und in einer Mehrbestückung zumindest einen der zusätzlichen, oben genannten Bedien- und/oder Anzeigeelemente aufweisen und/oder ansteuern kann.

Die Ladeeinheit kann mit der Dockingstation über einen Leistungsanschluss elektrisch gekoppelt werden. Insbesondere ist in der Verriegelungsposition des Verriegelungsmoduls (z.B. bei in den Ausnehmungen eingesetzten Stegen), also bei einer mechanischen Kopplung der Ladeeinheit mit der Dockingstation, eine elektrische Kopplung durch den Leistungsanschluss zwischen der Dockingstation und der Ladeeinheit vorhanden.

Innerhalb der Dockingstation kann eine Leiterplatte als Mains Board angeordnet sein, welche den Leistungsanschluss aufweist. Für eine sichere werkzeuglose Koppelung zwischen Ladeeinheit und Dockingstation kann die Leiterplatte des Mains Boards in der Dockingstation in einer Ebene parallel zum Boden der Dockingstation und/oder parallel zur Ebene des Schutzgehäusedeckels der Dockingstation oder das HPS-Modul in einer Ebene parallel zum Boden der Wannenbaugruppe vorzugsweise schwimmend gelagert sein.

Innerhalb der Dockingstation kann eine funktionale Trennung zwischen der Leistungselektronik und der Kommunikationselektronik vorgesehen sein. Hierzu kann innerhalb der Dockingstation neben dem Mains Board eine Leiterplatte als Schnittstellen (Interface) Board eingerichtet sein, auf welchem externe Datenanschlüsse mit entsprechenden Anschlussbuchsen verbunden sind. Die Anschlussbuchsen können über Patchkabel angeschlossen werden, welche in die Wannenbaugruppe der Ladeeinheit im montierten Zustand der Ladevorrichtung eingeführt werden und dort insbesondere mit dem ECU-Modul verbunden werden können.

Bevorzugt hat das Interface Board eine Anschlussbuchse, welche Anschlüsse für einen General Purpose Input/Output-Bus (GPIO) einerseits und einen CAN-Bus andererseits aufweist. Dadurch kann die Verkabelung zwischen Interface-Board und ECU-Modul besonders einfach erfolgen, da über ein einziges Kabel zwei verschiedene Busse geführt werden können.

Die Verbindung eines LANs (Local Area Network) zwischen dem Interface Board und dem ECU erfolgt bevorzugt über ein Patchkabel, wobei auf einem Kabel und in den jeweiligen Buchsen auch Anschlüsse von zwei zueinander getrennt betriebenen LAN-Netzen geführt werden können. Somit ist über ein einziges Kabel eine Verbindung von zwei verschiedenen lokalen Netzen möglich.

Die Wannenbaugruppe ist bevorzugt ein wannenförmiges Gehäuse mit Seitenwänden oder einer umlaufenden Seitenwand. Die Seitenwände umschließen insbesondere das Leistungsmodul umlaufend, bevorzugt vollständig umlaufend. Somit kann über die Seitenwände eine seitliche Abdichtung der Wannenbaugruppe erfolgen.

In der Seitenwand kann ein Auslass für ein Ladekabel vorgesehen sein. Über den Ladeanschluss kann ein fest angeschlagenes Ladekabel angeschlossen werden, falls keine Ladebuchse elektrisch installiert werden soll. Der Auslass des Ladekabels ist bevorzugt in einem Rücksprung einer Seitenwand angeordnet. Die Seitenwand kann in das Innere der Wannenbaugruppe zurückspringen, insbesondere im Bereich, in dem eine Ladebuchse angeordnet wird. Für den Fall, dass ein fest angeschlagenes Ladekabel verwendet wird, kann eine nicht verdrahtete Ladebuchse in der Wannenbaugruppe angeordnet werden, um als "Steckergarage" zu fungieren.

Die Wannenbaugruppe weist darüber hinaus bevorzugt einen Boden auf. Im montierten Zustand der Ladevorrichtung liegt der Boden der Wannenbaugruppe vorzugsweise an einem Schutzgehäusedeckel der Dockingstation an. Bevorzugt ist der Boden dem Schutzgehäusedeckel der Dockingstation zugewandt.

Wie bereits erläutert, kann das HPS Modul als Leiterplatte gebildet sein. Um sicherzustellen, dass sich das HPS Modul besonders einfach mit dem Leistungsanschluss an der Dockingstation koppeln lässt, ist das HPS Modul schwimmend gelagert. Durch die schwimmende Lagerung ist es möglich, Stecker und Buchse des Leistungsanschlusses während der Montage der Ladevorrichtung zueinander auszurichten, in dem mit Hilfe von Führungsmitteln die jeweilige Leiterplatte, welche schwimmend gelagert ist, in der Ebene der Lagerung gegebenenfalls verschoben wird.

Gemäß einer weiteren Ausführungsform der anmeldungsgemäßen Ladevorrichtung kann das Schutzgehäuse aus Metall sein, insbesondere aus Aluminium (z.B. ein Aluminiumdruckgussgehäuse). Ein Schutzgehäuse aus Metall lässt sich einfach fertigen und bietet gleichzeitig eine hohe physische Sicherheit. Bei anderen Varianten der Anmeldung kann das Schutzgehäuse auch aus einem nicht-metallischen Material gebildet sein. Hier bietet sich insbesondere ein glasfaserverstärktes Material oder dergleichen an.

Gemäß einer weiteren Ausführungsform der anmeldungsgemäßen Ladevorrichtung kann das Schutzgehäuse mindestens einen Vorsprung umfassen. Die Ladeeinheit und/oder die Dockingstation kann/können mindestens ein zu dem Vorsprung korrespondierende Ausnehmung umfassen. In dem befestigten Zustand des Schutzgehäuses der mindestens eine Vorsprung zumindest teilweise in der mindestens einen Ausnehmung eingesetzt sein. Indem das Schutzgehäuse über Verlängerungen bzw. Vorsprünge verfügen kann, die in hierzu korrespondierende Aussparungen (z.B. in Form einer Nut) der Ladeeinheit und/oder (bevorzugt) der Dockingstation im befestigten Zustand zumindest teilweise eingesetzt sind, kann insbesondere verhindert werden, dass sich zwischen einer Gehäusewand des Schutzgehäuses und der Ladeeinheit und/oder der Dockingstation ein Spalt ergibt. Die Zugriffssicherheit wird weiter verbessert.

Gemäß einer weiteren Ausführungsform der anmeldungsgemäßen Ladevorrichtung kann das Schutzgehäuse mindestens ein Raststück umfassen, vorzugsweise eine Mehrzahl von Raststücken. Die Ladeeinheit und/oder (bevorzugt) die Dockingstation kann mindestens ein zu dem Raststück korrespondierendes Gegenstück aufweist, vorzugsweise eine entsprechende Mehrzahl von Gegenstücken. In dem befestigten Zustand des Schutzgehäuses kann das mindestens eine Raststück mit dem mindestens einen Gegenstück verrastet sein. Beispielsweise kann ein Raststück in Form einer Rastnase mit einem Gegenstück in Form einer Rastaufnahme zusammenwirken.

Um zu verhindern, dass in einem befestigten Zustand des Schutzgehäuses das Schutzgehäuse von einem Unbefugten in einfacher Weise entfernt werden kann, kann, gemäß einer bevorzugten Ausführungsform der anmeldungsgemäßen Ladevorrichtung, die Ladevorrichtung mindestens ein Sperrteil umfassen, welches in einem montierten Zustand (der Ladevorrichtung und des Sperrteils) positionsunveränderlich angeordnet ist, zumindest in Bezug zu der Dockingstation. Dies meint insbesondere, dass der Abstand zwischen Sperrteil (bzw. des mindestens einen Sperrelements) und Dockingstation in dem montierten Zustand, also wenn die Ladevorrichtung und/oder das Sperrteil an einem Trägerelement befestigt sind, unveränderlich ist.

Das Sperrteil kann mindestens ein erstes Sperrelement umfassen. Das Schutzgehäuse kann mindestens ein zweites zu dem ersten Sperrelement korrespondierendes Sperrelement umfassen. Das zweite Sperrelement und das erste Sperrelement können in einem geschlossenen Zustand der Sperrelemente zusammenwirken, derart, dass ein Bewegen des Schutzgehäuses (in einem befestigten Zustand des Schutzgehäuses) blockiert ist. Anders ausgedrückt können die genannten Sperrelemente derart ineinandergreifen, dass eine Bewegung des Schutzgehäuses relativ zu der Dockingstation blockiert ist.

Beispielsweise kann das Sperrteil fest an der Ladeeinheit und/oder (vorzugsweise an der) Dockingstation fixiert sein. Alternativ, gemäß einer bevorzugten Ausführungsform, kann das Sperrteil ein separates Bauteil sein, welches im montierten Zustand der Dockingstation an einem Trägerelement in einem bestimmten Abstand zu der Dockingstation an dem Trägerelement angeordnet sein kann, so dass ein bestimmter Abstand zwischen dem zweiten Sperrelement und der Dockingstation (unveränderlich) vorhanden ist. Beispielsweise kann das Sperrteil nach einer Montage der Dockingstation an dem Trägerelement ebenfalls an dem Trägerelement mit einem vorgegebenen Abstand zur Dockingstation angebracht werden, beispielsweise angeschraubt werden. Hierdurch wird insbesondere eine (einfache) Nachrüstbarkeit von bereits installierten Ladevorrichtungen, die bisher kein Schutzgehäuse besitzen, ermöglicht.

Besonders bevorzugt können zumindest das erste Sperrelement und das zweite Sperrelement einen Schlossmechanismus bilden. Das erste Sperrelement und/oder das zweite Sperrelement können durch mindestens einen Schlüssel zwischen einer aufgeschlossenen Position und einer verschlossenen Position bewegbar sein, wobei sich das erste Sperrelement und das zweite Sperrelement in der verschlossenen Position in dem geschlossenen Zustand befinden. Anders ausgedrückt kann in der geschlossenen Position das zweite Sperrelement und das erste Sperrelement (in dem befestigten Zustand) zusammenwirken, derart, dass ein Bewegen des Schutzgehäuses blockiert ist.

Der Schlossmechanismus kann vorzugsweise ein mechanischer Schlossmechanismus sein. Mit einem mechanischen Schlüssel (beispielsweise durch herkömmliches Drehen eines in einem Schlosszylinder (der Teil des zweiten Sperrelements sein kann) eingesteckten Schlüssels) kann der Schlossmechanismus geöffnet und geschlossen werden. Bei anderen Varianten kann der Schlüssel auch elektronisch wirken oder als Zeichenkombination auf das Schloss übertragen werden. Beispielhafte weitere (und nicht abschließende) Schlossmechanismen umfassen Zahlenkombinationsschlösser, Magnetschlösser, mechatronische Schlösser, motorbetriebene Schlösser, Funkschlösser etc. Bei bestimmten Schlossarten kann das Material des Schutzgehäuses insbesondere ein nicht-metallisches Material sein. Die Energieversorgung für ein Schloss (falls erforderlich) kann vorzugsweise induktiv erfolgen. Auch kann die Energieversorgung durch die Ladevorrichtung und/oder eine Batterie erfolgen.

Gemäß einer bevorzugten Ausführungsform der anmeldungsgemäßen Ladevorrichtung kann das erste Sperrelement mindestens eine Sperraufnahme (insbesondere in Form einer Aussparung) aufweisen. Das zweite Sperrelement kann einen bewegbarer Sperrzapfen aufweisen, eingerichtet zum Eingreifen in die Sperraufnahme in dem geschlossenen Zustand. Beispielsweise kann der Sperrzapfen an einem Übersetzungselement (der beispielsweis mit einem Schlosszylinder zusammenwirkt) befestigt sein. Durch eine Drehung eines Schlüssels kann beispielsweise der Sperrzapfen zwischen einer aufgeschlossenen Position und einer verschlossenen Position bewegt werden.

Das Sperrteil kann vorzugsweise ein Blechteil sein, wobei das mindestens eine erste Sperrelement an dem Blechteil befestigt ist, insbesondere angeschweißt sein kann. Beispielsweise kann das Sperrteil eine im Wesentlichen reckteckförmige Grundform aufweisen, mit vier (Seiten-) Kanten.

Gemäß einer weiteren Ausführungsform der anmeldungsgemäßen Ladevorrichtung kann mindestens eine erste (Seiten-)Kante des Sperrteils Z-förmig gebildet sein (bzw. ein Z-förmiges Profil aufweisen kann). Vorzugsweise können zumindest zwei gegenüberliegende erste (Seiten-)Kanten des Sperrteils Z-förmig gebildet sein. Das Schutzgehäuse kann mindestens eine zweite zu der ersten Kante korrespondierende Kante aufweisen, die insbesondere L-förmig gebildet sein kann (bzw. ein L-förmiges bzw. winkelförmiges Profil aufweisen kann). Vorzugsweise können zumindest zwei gegenüberliegende zweite Kanten L-förmig gebildet sein.

Die zweite Kante kann die erste Kante in dem befestigten Zustand des Schutzgehäuses hintergreifen. Hierdurch kann sichergestellt werden, dass in befestigten Zustand kein Spalt zwischen Sperrteil und Schutzgehäuse existiert, durch die ein Zugriff auf den genannten Teilbereich möglich wäre. Zudem können die Profile eine Führungsfunktion übernehmen, um bei einem Befestigungsvorgang des Schutzgehäuses dieses in eine definierte Endposition zu führen. (Nur) In der Endposition können zumindest die zwei Sperrelemente in die geschlossene Position bzw. den geschlossenen Zustand bewegt werden.

Zwar wurde beschrieben, dass in dem befestigten Zustand des Schutzgehäuses ein Zugriff auf das Verriegelungsmodul verhindert wird. Jedoch kann es, z.B. aufgrund von Fertigungstoleranzen oder unbefugtes Beschädigen der Ladevorrichtung dazu kommen, dass Unbefugte mittels eines Drahtes oder dergleichen das Verriegelungsmodul bewegen können, auch wenn das Verriegelungsmodul von dem Schutzgehäuse und der Dockingstation und/oder der Ladeeinheit verdeckt ist. Um in diesem Fall eine Bewegung des Verriegelungsmoduls zu verhindern, wird, gemäß einer bevorzugten Ausführungsform der anmeldungsgemäßen Ladevorrichtung vorgeschlagen, dass das Schutzgehäuse ein Anschlagelement umfassen kann. Das Anschlagselement kann derart an einer Innenwand des Schutzgehäuses angeordnet sein (sich insbesondere von einer Innenwand ins Innere des Schutzgehäuses erstrecken), dass in dem befestigten Zustand des Schutzgehäuses ein Bewegen des Verriegelungsmoduls in die geöffnete Position durch das Anschlagselement blockiert ist. Anders ausgedrückt ist im befestigten Zustand des Schutzgehäuses eine Bewegung des Verriegelungsmoduls zumindest soweit durch das Anschlagselement eingeschränkt, dass das Verriegelungsmodul zumindest nicht in die geöffnete Position bewegt werden kann.

Gemäß einer bevorzugten Ausführungsform der anmeldungsgemäßen Ladevorrichtung kann die Ladeeinheit mindestens eine Wannenbaugruppe umfassen. Die Mehrzahl von Stegen kann bodenseitig an der Wannenbaugruppe angeordnet sein und sich insbesondere vom Inneren der Wannenbaugruppe weg weisend erstrecken. Hierdurch können die Stege in die Ausnehmungen eingreifen, so dass insbesondere in der Verrastposition der Stege der Boden der Wannenbaugruppe vorzugsweise an dem Schutzgehäusedeckel der Dockingstation anliegt bzw. kontaktiert. Durch anschließendes Fixieren der Stege an der Dockingstation, entsprechend den obigen Ausführungen, kann die Ladeeinheit an der Dockingstation mit entsprechend anliegendem Boden arretiert werden.

Das Verriegelungsmodul kann, gemäß einer weiteren Ausführungsform der anmeldungsgemäßen Ladevorrichtung, als Verriegelungsbügel mit zwei im Wesentlichen parallel zu einander verlaufenden Schenkeln und ein die Schenkel verbindendes Verbindungselement gebildet sein. Jeder Schenkel kann mindestens ein zweites Verriegelungselement aufweisen. Insbesondere kann das Verriegelungsmodul eine im Wesentlichen U-förmige Form aufweisen. In jedem Schenkel können vorzugsweise beabstandet zueinander zwei zweite Verriegelungselemente vorgesehen sein, in die die ersten Verriegelungselemente insbesondere eingreifen können.

Die Schenkel können über ein Verbindungselement miteinander verbunden sein. Das Verbindungselement kann zumindest teilweise den genannten Teilbereich bilde und insbesondere zumindest teilweise das Griffelement bilden. Ein Nutzer kann mittels des Griffelements das Verriegelungsmodul in einfacher Weise zwischen der geöffneten Position und der Verriegelungsposition bewegen.

Gemäß einer besonders bevorzugten Ausführungsform der anmeldungsgemäßen Ladevorrichtung kann ein Steg einen Zapfenabschnitt mit einem Verriegelungskopf als erstes Verriegelungselement aufweisen. Insbesondere kann sich der Zapfenabschnitt an einen Stegabschnitt anschließen, der mit dem Boden der Ladeeinheit verbunden ist. Das im nicht montierten Zustand freie Ende eines Stegs kann insbesondere durch den Verriegelungskopf gebildet werden, der sich an den Zapfenabschnitt anschließen kann. Beispielsweise kann der Zapfenabschnitt durch einen Freistich gebildet sein. Insbesondere ist die Dicke des Zapfenabschnitts geringer als die Dicke des Verriegelungskopfes.

In der Verrastposition kann durch eine Bewegung des Verriegelungsmoduls von der geöffneten Position in die Verriegelungsposition ein Hintergreifen des Verriegelungskopfes durch eine Ausnehmung des Verriegelungsmoduls erfolgen. Eine Ausnehmung in dem Verriegelungsmodul bildet insbesondere ein zweites Verriegelungselement.

Durch das Hintergreifen wird insbesondere der Steg an der Dockingstation formschlüssig fixiert. Eine Bewegung des Stegs in dieser Verriegelungsposition wird durch den gebildeten Formschluss zwischen Verriegelungskopf und Ausnehmung verhindert. Insbesondere kann ein Innendurchmesser der Ausnehmung zu der Dicke des Zapfenabschnitts derart korrespondieren, dass der Zapfenabschnitt in die Ausnehmung einführbar ist. Der Innendurchmesser kann ferner derart dimensioniert sein, dass dieser geringer ist als die Dicke (bzw. der Außendurchmesser) des Verriegelungskopfes, so dass eine Bewegung des Stegs in eine Richtung entlang der Ausnehmung in der Verriegelungsposition blockiert wird.

Vorzugsweise kann der Verriegelungskopf in der Verrastposition durch eine als zweites Verriegelungselement gebildete Ausnehmung des Verriegelungsmoduls durchführbar sein, derart, dass durch eine Bewegung des Verriegelungsmoduls von der geöffneten Position in die Verriegelungsposition ein Hintergreifen des Verriegelungskopfes erfolgt.

Wie bereits beschrieben wurde, können eine Mehrzahl von Stegen an der Ladeeinheit und eine Mehrzahl von korrespondierenden Ausnehmungen an der Dockingstation vorgesehen sein. Vorzugsweise kann die Ladeeinheit vier Eckbereiche aufweisen, wobei in jedem der Eckbereiche jeweils ein zuvor beschriebener Steg angeordnet sein kann. Die Dockingstation kann (ebenfalls) vier Eckbereiche aufweisen, wobei in jedem der Eckbereiche jeweils eine zu einem entsprechenden Steg korrespondierende Ausnehmung angeordnet sein kann. Durch Anordnung der Stege und Ausnehmungen in den Eckbereichen der jeweiligen Module kann eine besonders sichere Arretierung der Ladeeinheit an der Dockingstation bereitgestellt werden.

Gemäß einer weiteren Ausführungsform der anmeldungsgemäßen Ladevorrichtung kann die Bewegung zwischen der Verriegelungsposition und der geöffneten Position entlang einer Geraden erfolgen.

Um ein Einrutschen bzw. ein Einstecken der Stege, insbesondere des Zapfenabschnitts, in die jeweilige Ausnehmung zu unterstützen, kann, gemäß einer weiteren Ausführungsform der anmeldungsgemäßen Ladevorrichtung, der Verriegelungskopf eine abgeschrägte Fläche aufweisen, wobei die abgeschrägte Fläche an der Seite des Verriegelungskopfes angeordnet sein kann, die in der geöffneten Position des Verriegelungsmoduls dem (jeweiligen) zweiten Verriegelungselement zugewandt ist. Insbesondere können sämtliche Verriegelungsköpfe (bzw. -dome) entsprechend ausgebildet sein.

Um eine fehlerhafte Arretierung und insbesondere nicht ausreichende Befestigung zu verhindern, kann vorzugsweise das Verriegelungsmodul von der geöffneten Position in die Verriegelungsposition nur dann bewegbar sein, wenn sämtliche Stege der Ladeeinheit in der Verrastposition innerhalb der Ausnehmungen der Dockingstation sind. Für den Fall, dass ein oder mehrere Steg/e noch nicht in der Verrastposition ist/sind, kann das Bewegen des Verriegelungsmoduls in die Verriegelungsposition, beispielsweise durch Blockieren eines Einführens des Zapfenabschnitts des nicht in der Verrastposition befindlichen Stegs in die entsprechende Ausnehmung des Verriegelungsmoduls, gesperrt sein.

Ferner ist erkannt worden, dass bei einer Mehrzahl von Stegen, beispielsweise jeweils ein in jedem Eckbereich der Ladeeinheit angeordneter Steg (also vier Stege), das gleichzeitige Einführen dieser Stege in die Verrastposition und Bewegen des Verriegelungsmoduls in die Verriegelungsposition für einen einzelnen Nutzer komplex und schwierig zu handhaben sein kann.

Um das Befestigen der Ladeeinheit an der Dockingstation noch weiter zu vereinfachen, wird gemäß einer bevorzugten Ausführungsform der anmeldungsgemäßen Ladevorrichtung vorgeschlagen, dass das Verriegelungsmodul von der geöffneten Position in eine Verriegelungszwischenposition bewegbar sein kann, wenn mindestens ein erster Steg in der Verrastposition ist. Das Verriegelungsmodul von der Verriegelungszwischenposition kann in die Verriegelungsposition bewegbar sein, wenn mindestens ein zweiter Steg in der Verrastposition ist.

Insbesondere kann vorgesehen sein, dass zunächst nur der mindestens eine erste Steg, beispielsweise die in den unteren Eckbereichen (oder oberen Eckbereichen) angeordneten ersten Stege, in die ersten Ausnehmungen der Dockingstation eingeführt werden, bis sie in der Verrastposition sind. Dann kann das Verriegelungsmodul in die Verriegelungszwischenposition bewegt werden. In der Verriegelungszwischenposition ist das mindestens eine erste Verriegelungselement des mindestens einen ersten Stegs mit dem entsprechenden zweiten Verriegelungselement derart in Eingriff, dass eine Bewegung des ersten Stegs aus der Ausnehmung hinaus blockiert wird. Insbesondere ist der mindestens eine erste Steg an der Dockingstation in der Verriegelungszwischenposition (bereits) fixiert.

In einem nächsten Schritt kann vorgesehen sein, dass der mindestens eine zweite Steg, beispielsweise die in den oberen Eckbereichen (bzw. unteren Eckbereichen) angeordneten zweiten Stege, in die zweiten Ausnehmungen der Dockingstation eingeführt werden, bis sie (ebenfalls) in der Verrastposition sind. Dann kann das Verriegelungsmodul von der Verriegelungszwischenposition in die Verriegelungs(end)position bewegt werden.

Dies erlaubt vorteilhafterweise, dass zuerst auf die Unterseite (oder eine andere Seite) von einem Nutzer Druck ausgeübt wird, wodurch das Verriegelungsmodul, insbesondere der Verrastbügel, in die Verriegelungszwischenposition bzw. "Verrast-Zwischenposition" verfährt. Anschließend kann Druck auf die Oberseite (oder eine andere Seite) der Ladeeinheit durch einen Nutzer ausgeübt werden, wodurch das Verriegelungsmodul, insbesondere der Verrastbügel, in die Verriegelungs(end)position fährt. Durch diesen Mechanismus ist insbesondere eine Zweihand-Bedienung möglich.

Gemäß einer weiteren Ausführungsform kann das Verriegelungsmodul des Verriegelungsmechanismus in der Dockingstation fest integriert sein. Insbesondere kann die Dockingstation mindestens eine Führung aufweisen, eingerichtet zum Führen des Verriegelungsmoduls während einer Bewegung zwischen der geöffneten Position und der geschlossenen Position. Insbesondere können zwei Führungen vorgesehen sein, die zu den zwei Schenkeln eines Verriegelungsbügels korrespondieren, um die Schenkel zwischen der geöffneten Position (ggf. über eine Verriegelungszwischenposition) und der Verriegelungsposition zu bewegen. Unter integriert ist zu verstehen, dass das Verriegelungsmodul von der Dockingstation nicht zerstörungsfrei getrennt werden kann. Insbesondere verbleibt das Verriegelungsmodul während aller Betriebsfälle in der Dockingstation. Ein separates Modul zum Befestigen wird nicht benötigt.

Um das Befestigen der Ladeeinheit an der Dockingstation noch weiter zu vereinfachen, kann gemäß einer bevorzugten Ausführungsform zwischen dem Verriegelungsmodul und der Dockingstation mindestens ein Federelement befestigt sein, derart, dass in der geöffneten Position eine in Richtung der Verriegelungsposition wirkende Kraft auf das Verriegelungsmodul durch das Federelement ausgeübt wird. Insbesondere kann hierdurch ein automatisches Verfahren des Verriegelungsmoduls von der geöffneten Position in die Verriegelungsposition bereitgestellt werden, wenn die Stege in der Verrastposition sind. Beispielsweise kann zwischen jedem Schenkel und der Dockingstation ein Federelement vorgesehen sein.

Darüber hinaus kann, gemäß einer weiteren Ausführungsform der anmeldungsgemäßen Ladevorrichtung, mindestens ein Fixierungselement vorgesehen sein, eingerichtet zum Fixieren des Verriegelungsmoduls in der Verriegelungsposition derart, dass ein Bewegen des Verriegelungsmoduls bei einer Fixierung des Fixierungselements blockiert wird/ist. Hierdurch kann sichergestellt werden, dass sich das Verriegelungsmodul nicht versehentlich in die geöffnete Position bewegt und sich die Ladeeinheit versehentlich von der Dockingstation löst. Beispielsweise kann als Fixierungselement eine Schraube, vorzugsweise eine nur durch einen speziell gebildeten Schraubenzieher schraubbare Schraube (z.B. Sicherheitsschraube, wie eine mit einem speziellen 6-Kant-Winkelschlüssel mit Innenpin (2mm) verschraubbare Schraube) vorgesehen sein. Beispielsweise kann pro Schenkel eines Verriegelungsbügels eine Schraube vorgesehen sein. Insbesondere kann durch Herstellung einer entsprechenden Verschraubung eine Bewegung des Verriegelungsmoduls blockiert werden. Durch eine Lösung der mindestens einen Schraube kann eine Bewegung des Verriegelungsmodus freigegeben werden. Die Sicherheit kann noch weiter verbessert werden.

Bei einer weiteren Ausführungsform der Ladevorrichtung kann mindestens ein Dichtungselement zwischen der Dockingstation und der Ladeeinheit vorgesehen sein. In der Verriegelungsposition (bei der sich sämtliche Stege in der Verrastposition befinden) bzw. im montierten Zustand der Ladevorrichtung kann eine Abdichtung zwischen der Dockingstation und der Ladeeinheit erfolgen. Insbesondere kann in der Verriegelungsposition bzw. dem montierten Zustand der Ladevorrichtung eine Verklemmung des Dichtungselements (z.B. eine Kompression einer Schaumdichtung oder dergleichen) zwischen Ladeeinheit, insbesondere der Wannenbaugruppe der Ladeeinheit, und der Dockingstation, insbesondere dem Schutzdeckelgehäuse der Dockingstation, bereitgestellt und insbesondere in dem montierten Zustand der Ladevorrichtung beibehalten werden. Insbesondere können die Stege, Ausnehmungen und das Verriegelungsmodul entsprechend dimensioniert und ausgelegt sein.

Gemäß einer bevorzugten Ausführungsform kann vorgesehen sein, dass der Schutzgehäusedeckel bevorzugt von der oberen Ebene der Dockingstation zurückspringt, so dass die Seitenwände der Dockingstation im montierten Zustand des Schutzgehäusedeckels diesen kragenförmig überragen. Dies ermöglicht es, durch die Seitenwände eine Abdichtung der Dockingstation im montierten Zustand der Ladevorrichtung zu gewährleisten, indem beispielsweise in der Ladeeinheit korrespondierend zu den Seitenwänden als Dichtungselement umlaufende Dichtlippen vorgesehen sind, die im montierten Zustand gegen die Ränder der Seitenwände gedrückt werden und dort aufgrund der zuvor beschriebenen Verriegelung gehalten werden. Dadurch, dass der Schutzgehäusedeckel zurückspringt, kann sichergestellt werden, dass die Dichtlippen vollständig die Seitenwände umgreifen.

Ferner ist eine Ladestation offenbart. Die Ladestation umfasst mindestens eine Ladesäule mit einer Aufnahme. Die Ladestation umfasst mindestens eine in der Aufnahme anordnenbare zuvor beschriebene Ladevorrichtung.

Die Ladesäule kann einen Ladesäulenfuß und einen Ladesäulenkopf aufweisen. Bei einer derartigen Ladesäule ist insbesondere im Ladesäulenkopf eine Aufnahme vorgesehen, die von umlaufenden Seitenwänden umgeben sein kann. In dieser Aufnahme kann die Dockingstation angeordnet werden. Innerhalb dieser Aufnahme kann das Netzanschlusskabel in die Dockingstation eingeführt sein.

Nach Installation der Dockingstation in der Aufnahme kann sich zwischen der Seitenwand der Dockingstation und der Aufnahme insbesondere ein Ringspalt bilden. In diesen Ringspalt kann eine Gehäusewand der Ladeeinheit eingreifen. Wird die Ladeeinheit mit der Dockingstation in zuvor beschriebener Weise gekoppelt und insbesondere verriegelt, ist diese von oben auf die Dockingstation aufgesetzt. Umlaufende Seitenwände der Ladeeinheit können in den Ringspalt eingreifen, so dass von außen an der Ladesäule nicht erkennbar ist, dass die Ladeeinheit auf eine Dockingstation aufgesetzt ist.

Auch kann der Ladesäulenkopf aus zwei einander gegenüberliegenden Frontflächen gebildet sein, die jeweils eine Aufnahme für jeweils eine Dockingstation aufweisen können.

Die Ladeeinheit umfasst, wie bereits beschrieben wurde, ein Leistungsmodul (HPS Modul), ein Kommunikationsmodul (ECU Modul) und ein Benutzerschnittstellenmodul (UI Modul), wobei das Leistungsmodul eine erste Ladesteuerschaltung zur Ladesteuerung mit einem Elektrofahrzeug aufweist. Die Anforderungen an Ladeeinheiten können je nach Einsatzzweck höchst unterschiedlich sein. Dennoch ist es gewünscht, möglichst eine einheitliche Struktur einer Ladeeinheit zu schaffen, welche bedarfsgerecht angepasst werden kann. Insbesondere ist es zunächst notwendig, dass die Ladeeinheit grundlegende Ladesteuerfunktionen umfasst. Daher ist auf dem Leistungsmodul insbesondere eine erste Ladesteuerschaltung angeordnet.

Zusatzfunktionen, wie beispielsweise erweiterte Ladefunktionalitäten, Abrechnungen, Kommunikation, Benutzerinteraktion und dergleichen können bedarfsweise erforderlich sein oder eben nicht. Aus diesem Grunde wird insbesondere vorgeschlagen, dass ein Kommunikationsbus das Kommunikationsmodul und das Benutzerschnittstellenmodul mit dem Leistungsmodul verbindet. Über den Kommunikationsbus kann bedarfsweise das Kommunikationsmodul und/oder das Benutzerschnittstellenmodul angekoppelt werden.

Die Funktion des Leistungsmoduls, insbesondere der Ladesteuerschaltung, ist hiervon zunächst einmal unabhängig, so dass die Ladeeinheit auch ohne ein an den Kommunikationsbus angeschlossenes Kommunikationsmodul zur Bereitstellung von Ladefunktionalitäten eingerichtet sein kann. Wird das Kommunikationsmodul angekoppelt, so können weitergehende Funktionen, wie beispielsweise Verschlüsselung von Abrechnungsdaten, Austausch von Ladeparametern, Übermittlung von Informationen und dergleichen, durch das Kommunikationsmodul zur Verfügung gestellt werden.

Ein weiterer Aspekt der Anmeldung ist eine Ladeanordnung, umfassend ein Trägerelement (z.B. eine Wand), und mindestens ein an dem Trägerelement befestigte zuvor beschriebene Ladevorrichtung.

Es sei angemerkt, dass anmeldungsgemäße Einrichtungen, Module etc. aus Hardwarekomponenten (z.B. Prozessoren, Schnittstellen, Speichermitteln etc.) und/oder Softwarekomponenten (z.B. durch einen Prozessor ausführbarer Code) gebildet sein können.

Die Merkmale der Ladevorrichtungen und Ladeanordnungen (bzw. Ladestationen) sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Ladevorrichtung und die anmeldungsgemäße Ladeanordnung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht einer Ladestation;
- Fig. 2: eine Explosionszeichnung einer Ladestation mit Dockingstation und Ladeeinheit;
- Fig. 3: eine Ansicht einer geöffneten Dockingstation ;
- Fig. 4: eine Ansicht einer geschlossenen Dockingstation ;
- Fig. 5: eine Explosionsdarstellung einer Wannenbaugruppe einer Ladeeinheit;
- Fig. 6: eine Wannenbaugruppe einer Ladeeinheit im teilweise zusammengebauten Zustand;
- Fig. 7: eine Wannenbaugruppe einer Ladeeinheit von unten;
- Fig. 8a-c: montierte Wannenbaugruppen einer Ladeeinheit ohne Deckel;
- Fig. 9: eine Ansicht einer Deckelbaugruppe einer Ladeeinheit;
- Fig. 10: eine Unteransicht einer Deckelbaugruppe einer Ladeeinheit;
- Fig. 11: eine Schnittansicht einer Deckelbaugruppe einer Ladeeinheit,
- Fig. 12: eine schematische Ansicht eines Ausführungsbeispiels eines Verrieglungsmoduls,
- Fig. 13: eine schematische Ansicht eines Ausführungsbeispiels einer Ladeeinheit mit einem Verrieglungsmodul in einer geöffneten Position,
- Fig. 14: eine schematische Ansicht eines Ausführungsbeispiels der Ladeeinheit mit dem Verrieglungsmodul in einer Verriegelungsposition,
- Fig. 15: eine schematische Ansicht eines Ausführungsbeispiels der Ladeeinheit mit dem Verrieglungsmodul in einer Verriegelungszwischenposition,
- Fig. 16: eine schematische Detailansicht eines Stegs,
- Fig. 17: eine schematische Ansicht eines Ausführungsbeispiels einer Dockingstation mit einem Verrieglungsmodul,
- Fig. 18: eine schematische Detailansicht eines Stegs in einem verriegelten Zustand,
- Fig. 19: eine schematische Ansicht eines Ausführungsbeispiels der Dockingstation mit einem Verrieglungsmodul,
- Fig. 20: eine schematische Ansicht eines Ausführungsbeispiels eines Schutzgehäuses,
- Fig. 21: eine schematische Ansicht eines Ausführungsbeispiels eines Sperrteils,
- Fig. 22a: eine schematische Ansicht eines Ausführungsbeispiels einer Ladevorrichtung in einem unbefestigten Zustand des Schutzgehäuses,
- Fig. 22b: eine schematische Ansicht des Ausführungsbeispiels der Ladevorrichtung nach Figur 22a in einem befestigten Zustand des Schutzgehäuses,
- Fig. 23: eine schematische Ansicht eines Ausführungsbeispiels eines Schutzgehäuses und eines Sperrteils.

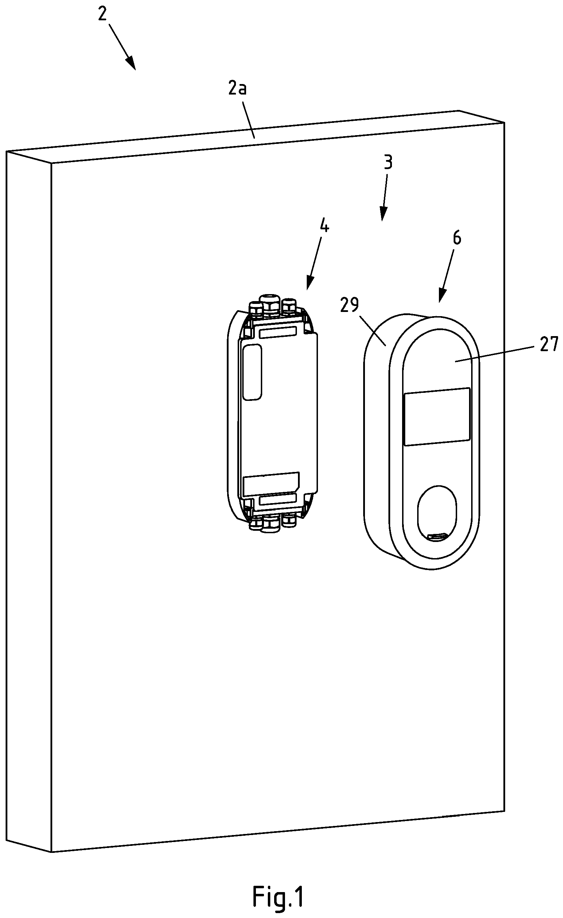

Figur 1 zeigt ein Ausführungsbeispiel einer Ladestation 2 bzw. Ladeanordnung 2 mit einem Trägerelement 2a. An dem Trägerelement 2a kann eine Dockingstation 4 und eine Ladeeinheit 6 befestigt werden. Ein Schutzgehäuse ist in der Figur 1 zu Gunsten einer besseren Übersicht noch nicht gezeigt.

Die Ladeanordnung 2, insbesondere die Dockingstation 4, kann einen elektrischen Anschluss zu einem (nicht gezeigten) Energieversorgungsnetz oder einer anderen Energiequelle (z.B. elektrischer Erzeuger) aufweisen, wobei der Anschluss mit der Dockingstation 4 verbunden sein kann.

Die Ladeeinheit 6 kann ein Gehäuse 29 mit einem Deckel 27 aufweisen. Insbesondere kann die Ladeeinheit 6 als Baugruppe, umfassend eine Wannenbaugruppe und eine Deckelbaugruppe, welche nachfolgend noch näher beschrieben werden, zusammengebaut sein und auf die Dockingstation 4 aufgesetzt und vorzugweise an der Dockingstation 4 mechanisch fixiert werden, wie noch näher ausgeführt wird.

Zusammen mit der mechanischen Fixierung kann die Ladeeinheit 6 elektrisch mit der Dockingstation 4 über eine/n Stecker/Buchse gekoppelt sein. Eine kommunikationstechnische Kopplung zwischen der Dockingstation 4 und der Ladeeinheit 6 kann über zumindest ein Patch-Kabel oder dergleichen erfolgen. Auch dies kann zusammen mit der mechanischen Fixierung erfolgen.

In einem montierten Zustand ist die Dockingstation 4 vorzugsweise an dem Trägerelement (z.B. eine Wand) 2a fixiert, beispielsweise angeschraubt, und die Ladeeinheit 6 umgreift insbesondere den äußeren Rand der Dockingstation 4 (im Wesentlichen) vollständig.

Die Dockingstation 4 kann bedarfsweise auch in einer Aufnahme einer Ladesäule eingesetzt werden. Auch dann sind die Seitenwände der Dockingstation 4 vorzugsweise zumindest teilweise von Seitenwänden der Ladeeinheit 6 umgriffen.

Wie der Figur 1 ferner zu entnehmen ist, sind die Grundflächen von Dockingstation 4 und Ladeeinheit 6 in etwa kongruent zueinander, so dass im montierten Zustand, von vorne betrachtet, die Ladeeinheit 6 die Dockingstation 4 vollständig abdeckt.

Vorliegend bilden die Dockingstation 4 und die Ladeeinheit 6 eine anmeldungsgemäße Ladevorrichtung 3.

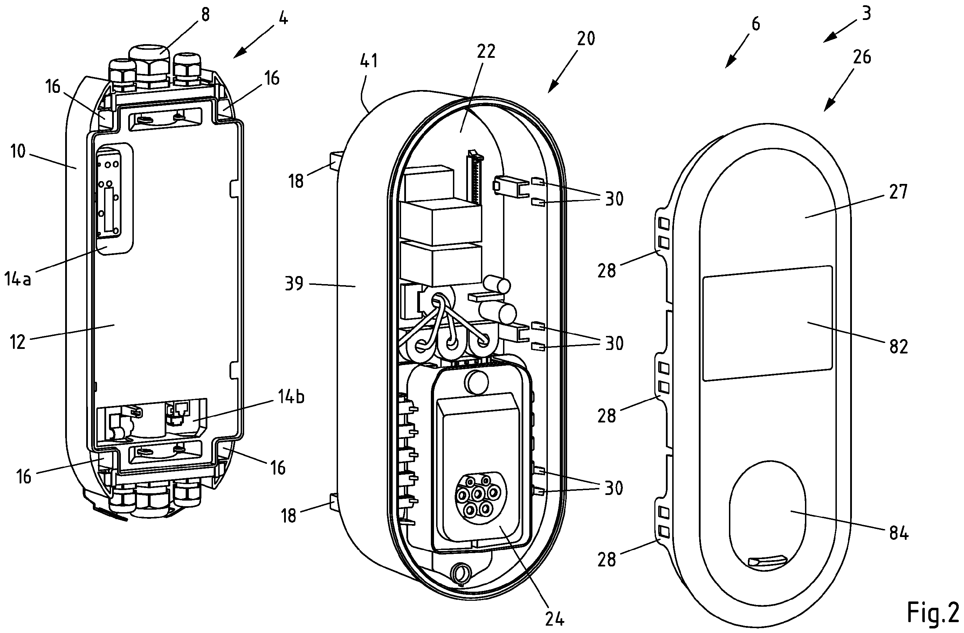

Der modulare Aufbau der Ladevorrichtung 3 in Form der Dockingstation 4 und der Ladeeinheit 6 ist beispielhaft in der Figur 2 näher dargestellt.

In der Figur 2 ist zunächst die Dockingstation 4 gezeigt, welche eine Kabeleinführung 8 in einer Seitenwand 10 aufweisen kann. Die Dockingstation 4 ist durch einen Schutzgehäusedeckel 12 zumindest teilweise auf der der Ladeeinheit 6 zugewandten Seite verschlossen. In dem Schutzgehäusedeckel 12 ist mindestens eine Ausnehmung 14a, 14b vorgesehen, welche nachfolgend noch näher beschrieben wird.

Die Ladeeinheit 6 kann vorzugsweise aus einer Wannenbaugruppe 20 und einer Deckelbaugruppe 26 gebildet sein, wobei die äußeren Wände dieser Baugruppen das Gehäuse 29 bilden (z.B. Wannenboden 41, umlaufende Seitenwand 39 und Deckel 27). Es versteht sich, dass bei anderen Varianten der Anmeldung das Gehäuse einer Ladeeinheit auch in anderer Form gebildet sein kann.

Die Dockingstation 4 verfügt über eine Mehrzahl von Ausnehmungen 16, insbesondere in Form von Öffnungen 16. Beispielsweise können zwischen dem Schutzgehäusedeckel 12 und der Seitenwand 10 der Dockingstation 4 Öffnungen 16 vorgesehen sein. Durch diese Öffnungen 16 kann insbesondere eine entsprechende Mehrzahl von Stegen 18 der Ladeeinheit 4, insbesondere der Wannenbaugruppe 20, in die Dockingstation 4 eingeführt werden, so dass die Wannenbaugruppe 20 und damit die Ladeeinheit 6 über die Stege 18 an der Dockingstation 4 fixiert werden kann, wie nachfolgend noch näher beschrieben wird.

Wie bereits erläutert, kann die Wannenbaugruppe 20 mit der Dockingstation 4 gekoppelt werden. Die Wannenbaugruppe 20 ist Teil der Ladeeinheit 6, welche zusätzlich die Deckelbaugruppe 26 aufweisen kann. Die Wannenbaugruppe 20 kann insbesondere ein Leistungsmodul 22 sowie eine Ladebuchse 24 aufnehmen. Die Wannenbaugruppe 20 ist bodenseitig mit einem Boden 41 im Wesentlichen verschlossen und wird deckelseitig durch die Deckelbaugruppe 26, insbesondere den Deckel 27, verschlossen.

Bei anderen Varianten der Anmeldung kann ein Leistungsmodul auch in einem anderen Element der Ladeanordnung angeordnet sein.

Vorzugsweise über Rastelemente 28 lässt sich die Deckelbaugruppe 26 an korrespondierenden Rastelementen 30 in der umlaufenden Seitenwand 39 der Wannenbaugruppe 20 fixieren. Die Deckelbaugruppe 26 kann in ihrem Deckel 27 einen Shutter 32 und/oder Bedienelemente, wie beispielsweise ein Display 96, aufweisen.

Im gefügten bzw. verbauten Zustand ist die Deckelbaugruppe 26 mit der Wannenbaugruppe 20 mechanisch gefügt und verschließt somit die Wannenbaugruppe 20 auf einer Oberseite. Bodenseitig ist die Wannenbaugruppe 20 mit der Dockingstation 4 gefügt und über die Seitenwände 10 der Dockingstation 4 kann bei einer hergestellten Verriegelung durch ein Verriegelungsmodul eine Abdichtung zwischen der Dockingstation 4 und der Wannenbaugruppe 20 erfolgen, wie noch näher beschrieben wird.

Zwischen der Deckelbaugruppe 26 und der Wannenbaugruppe 20 kann eine Abdichtung entlang des äußeren Randes erfolgen, welcher der Deckelbaugruppe 26 zugewandt ist.

Die Dockingstation 4 dient insbesondere als Anschlussebene und kann unabhängig von der Ladeeinheit 6 an ein Energieversorgungsnetz oder eine andere Energiequelle angeschlossen werden. Solange die Ladeeinheit 6 nicht mit der Dockingstation 4 gekoppelt ist, ist diese spannungsfrei. Über eine mechanische Kopplung der Ladeeinheit 6 mit der Dockingstation 4 wird die Ladeeinheit 6 mit dem Energieversorgungsnetz insbesondere auch elektrisch verbunden. Die Ladeeinheit 6 kann als Versorgungsebene verstanden werden, welche vorliegend Ladetechnik, Kommunikationstechnik und sonstige "Intelligenz" aufweisen kann.

Dieser modulare Aufbau der Ladevorrichtung 3 ermöglicht es insbesondere, zunächst die Dockingstation 4 durch einen hierfür qualifizierten Monteur zu montieren, ohne die Notwendigkeit, unmittelbar eine Ladeeinheit 6 montieren zu müssen.

Die Ladeeinheit 6 kann zu einem beliebigen späteren Zeitpunkt auch durch einen technischen Laien besonders einfach, mechanisch werkzeuglos mit der Dockingstation 4 gekoppelt werden, wodurch dann automatisch die Ladeeinheit 6 elektrifiziert wird. Die dargestellte Ladeeinheit 6 ist durch ihre spezielle Gestaltung aus Wannenbaugruppe 20 und Deckelbaugruppe 26, wie bereits zuvor erläutert, besonders flexibel und modular und lässt sich an den jeweiligen Einsatzzweck koppeln.

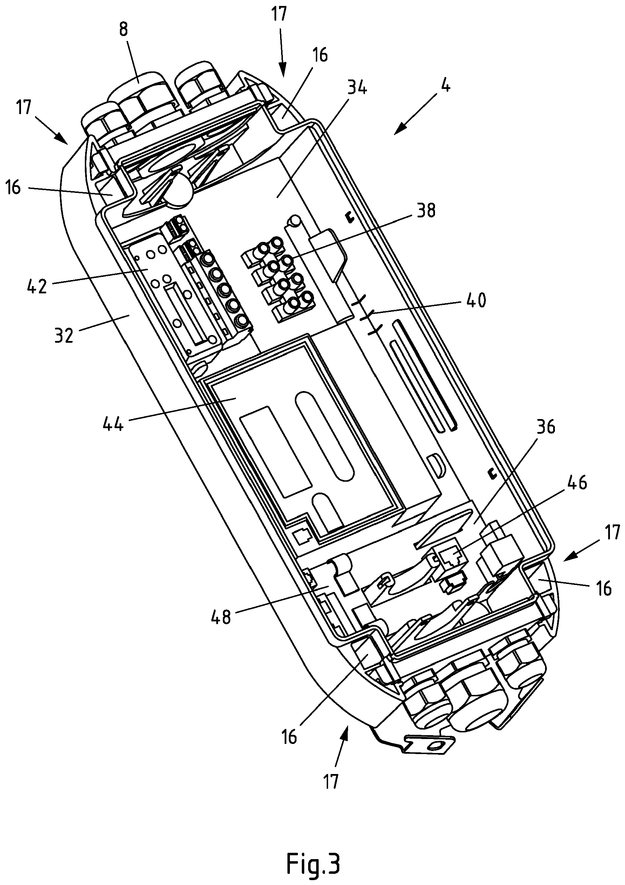

Eine beispielhafte Dockingstation 4 ist in der Figur 3 näher dargestellt. Die dargestellte Dockingstation 4 verfügt über einen Boden und Seitenwände 32 und in den vier Eckbereichen 17 jeweils über eine Ausnehmung 16. Eine Ausnehmung 16 ist eingerichtet zum Aufnehmen eines zu der jeweiligen Ausnehmung 16 korrespondierenden Stegs 18 einer Ladeeinheit 6.

Auf dem Boden der Dockingstation 4 ist vorliegend ein Mains-Board 34 und ein Interface-Board 36 angeordnet. Auf dem Mains-Board 34 ist eine Anschlussleiste 38 zum Anschluss eines Energieversorgungskabels vorgesehen.

An den Seitenwänden 32 und/oder dem Boden können Skalenstriche 40 vorgesehen sein.

Neben der Anschlussleiste 38 ist auf dem Mains-Board 34 noch ein Leistungsanschluss 42 als Buchse angeordnet.

Darüber hinaus ist vorliegend zwischen den Seitenwänden 32 eine Aufnahme 44 vorgesehen. Die Aufnahme 44 ist durch einen Deckel verschließbar. In der Aufnahme 44 kann ein Messgerät, z.B. ein Smart Meter oder ein iMS, rastend verankert werden. Nicht dargestellt sind Kabeldurchführungen durch die Seitenwände der Aufnahme 44, um das Messgerät zu verdrahten. Die Aufnahme 44 lässt sich über geeignete Bohrungen verplomben, was nicht näher dargestellt ist.

Auf einem Interface Board 36 sind Anschlüsse 46, 48 für ein Netzwerkkabel sowie für einen CAN (Controller Area Network) Bus und/oder einen GPIO (General Purpose Input/Output-Bus) Bus vorgesehen. Darüber hinaus können noch Anschlussbuchsen für eine Verbindung mit den Modulen, die innerhalb der Ladeeinheit 6 angeordnet sind, vorgesehen sein.

Die externe Verdrahtung mit einem lokalen Netz kann über eine Anschlussleiste erfolgen, welche dann z.B. über eine RJ45-Buchse abgreifbar ist. Hier sind insbesondere ausreichend Kontakte vorgesehen, um zumindest zwei voneinander unabhängige lokale Netzwerke anzuschließen. Dabei kann beispielsweise ein erstes lokales Netzwerk mit einer Zentrale gebildet werden und ein zweites lokales Netzwerk zwischen Master- und Slave Einheiten, also zwischen einer Ladeeinheit mit einem Master Controller mit zumindest einer, bevorzugt mehreren Ladeeinheiten mit nur einem Slave Controller. Die beiden lokalen Netzwerke können gemeinsam über ein einziges Patchkabel mit der Ladeeinheit 6 bzw. den darin angeordneten Modulen verbunden werden.

Zur Installation der Dockingstation 4 wird diese zunächst mechanisch an dem Trägerelement 2a, insbesondere einer Wand 2a, verschraubt (oder anderweitig befestig). Anschließend wird durch die Kabeleinführung 8 ein mehradriges Energiekabel in das Innere der Dockingstation 4 eingeführt. Dieses Kabel hat insbesondere große Kabelquerschnitte und eine starre Kabelseele. Daher sind die Kabel in der Regel schwer verarbeitbar.

Um sicherzustellen, dass die Kabel stets in der richtigen Länge abgelängt werden, kann der Monteur das Kabel an die Skala 40 anlegen und unmittelbar ablängen. Dadurch kann der Monteur das Anschlusskabel korrekt konfektionieren, so dass er es im Anschluss ohne Probleme auf die Anschlussleiste 38 auflegen kann.

Je nach Konfektionierung kann in der Aufnahme 44 ein Messgerät angeordnet werden. Dieses Messgerät wird ausgehend von der Anschlussleiste 38 über flexible Kabel verdrahtet. Ausgehend von dem Messgerät erfolgt erneut eine Verkabelung über flexible Kabel mit einem Leistungsanschluss 42. Ist kein Messgerät verbaut, so erfolgt unmittelbar eine Verdrahtung über ein flexibles Kabel zwischen der Anschlussleiste 38 und dem Leistungsanschluss 42. An dem Leistungsanschluss 42 ist ebenfalls eine Anschlussleiste zur Aufnahme der jeweiligen Kabel vorgesehen.

Über die Kabeleinführung 8 kann ein Netzwerkkabel ebenfalls in das Gehäuse der Dockingstation 4 eingeführt werden und auf die Anschlüsse 48 aufgelegt werden.

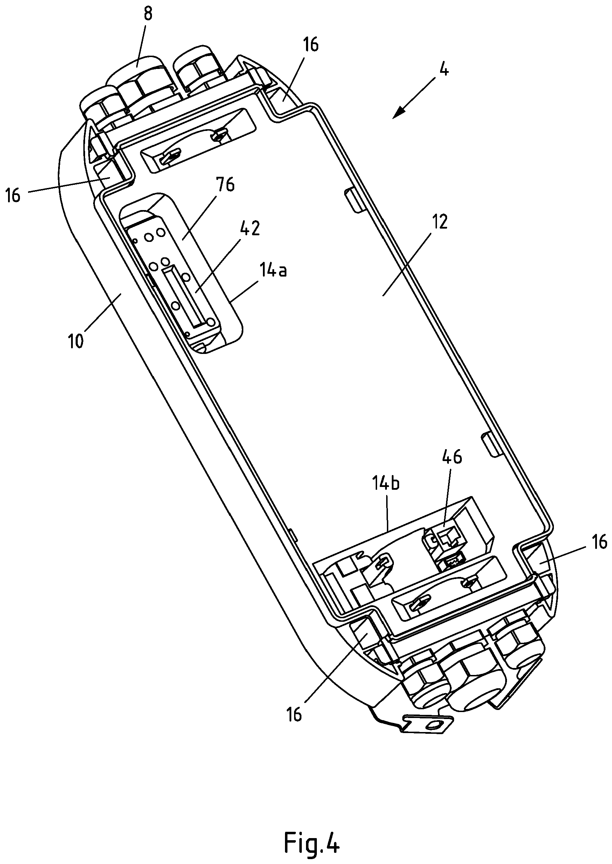

Nachdem die elektrische Verdrahtung vorgenommen wurde, erfolgt ein Verschließen des Gehäuses der Dockingstation 4, wie in der Figur 4 beispielhaft dargestellt ist, durch einen Schutzgehäusedeckel 12.

In der Figur 4 ist zu erkennen, dass der Schutzgehäusedeckel 12 neben der Ausnehmung 14a für den Leistungsanschluss 42 zumindest eine weitere Ausnehmung 14b für die Kommunikationsanschlüsse des Interface Boards 36 aufweist, insbesondere einen RJ45-Stecker sowie einen GPIO-Stecker und einen CAN-Bus-Stecker. Über die RJ45-Buchse 46 kann ein RJ45-Stecker eine Verbindung mit zwei voneinander getrennten LAN-Netzen aufnehmen.

An den Seitenrändern des Schutzgehäusedeckels 12 sind vorliegend zudem die zuvor beschriebenen Öffnungen 16 bzw. Ausnehmungen 16 vorgesehen. Die Öffnungen 16 befinden sich gemäß dem dargestellten bevorzugten Ausführungsbeispiel zwischen dem Schutzgehäusedeckel12 und der Seitenwand 10 der Dockingstation 4. Durch die Öffnungen 16 lassen sich die Stege 18 der Wannenbaugruppe 20 in die Dockingstation 4 einstecken, so dass diese Stege 18 insbesondere vollständig von der Seitenwand 10 der Dockingstation 4 (in einer Verrastposition) aufgenommen sind. Durch ein Verriegelungsmodul, das noch näher beschrieben wird, ist die Ladeeinheit 6 durch die Wannenbaugruppe 20 innerhalb der Dockingstation 4 im montierten Zustand mechanisch verankert.

Nachdem die Dockingstation 4 in der gezeigten Art und Weise installiert wurde, kann diese, geschützt durch den Schutzgehäusedeckel 12, zunächst unbestückt bleiben und zu einem beliebigen späteren Zeitpunkt mit einer Ladeeinheit 6, beispielsweise aufweisend eine Wannenbaugruppe 20 und eine Deckelbaugruppe 26, bestückt werden.

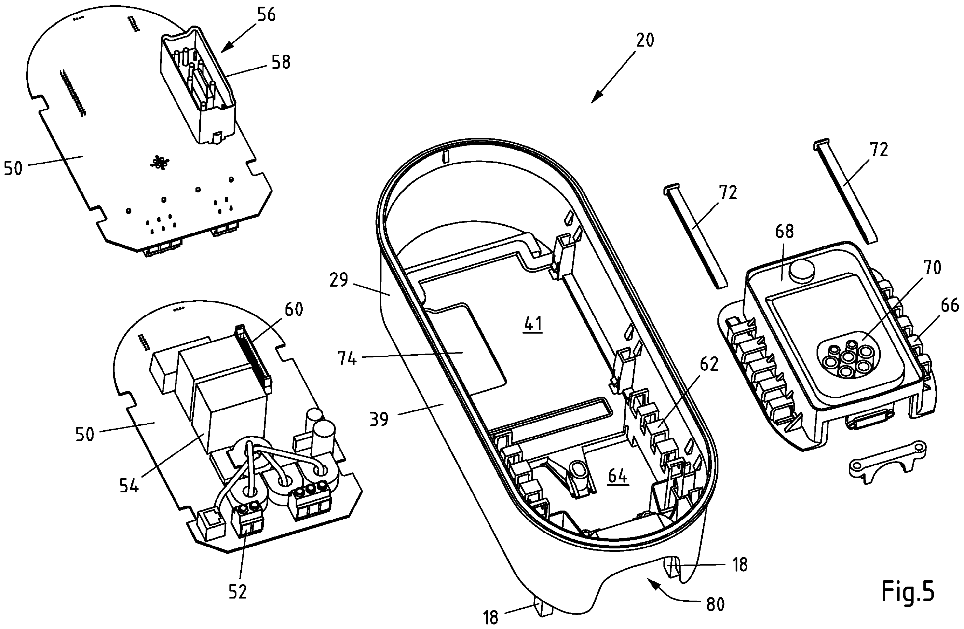

Eine Wannenbaugruppe 20 ist in einer Ausstattungsvariante in der Figur 5 näher dargestellt.

Die Wannenbaugruppe 20 weist ein Gehäuse 29 mit Seitenwänden 39 bzw. einer umlaufenden Seitenwand 39 und einen Boden 41 auf. Im Bereich der Seitenwände 39, respektive des Bodens 41, kann vorzugsweise ein Leistungsmodul 50 bodenseitig angeordnet und insbesondere in der Wannenbaugruppe 20 mechanisch verankert werden. Das Leistungsmodul 50 kann insbesondere als Leiterplatte mit darauf angeordneten Bauelementen und/oder darin integrierten Bauelementen gebildet sein.

Das Leistungsmodul 50 hat vorzugsweise einen Ladeanschluss 52 sowie eine Ladesteuerschaltung 54. Auf der Unterseite des Leistungsmoduls 50, wie ebenfalls in der Figur 5 dargestellt, ist insbesondere ein Stecker 56 angeordnet, welcher zu der Buchse des Leistungsanschlusses 42 der Dockingstation 4 korrespondiert. Umlaufend um den Stecker 56 ist vorliegend ein Kragen 58 angeordnet. Der Kragen 58 weist von der Oberfläche der Leiterplatte des Leistungsmoduls 50 fort. Insbesondere hat der Kragen 58 eine Erstreckung in diese Richtung, die größer ist, als die längste Erstreckung eines jeden Kontaktes des Steckers 56.

Auf den Leistungsmodul 50 können weitere Komponenten zur Leistungsüberwachung und/oder Leistungssteuerung vorgesehen sein. Darüber hinaus ist ein Anschluss 60 für einen Kommunikationsbus auf dem Leistungsmodul 50 angeordnet.

Der Anschluss 60 für den Kommunikationsbus ermöglicht es, den Kommunikationsbus mit dem Leistungsmodul 50 zu verbinden. Der Kommunikationsbus kann in der Art von Plug-and-Play sowohl ein Kommunikationsmodul als auch ein Benutzerschnittstellenmodul, welche nachfolgend noch beschrieben werden, aufnehmen und mit dem Leistungsmodul 50 verbinden. Dies ermöglicht es, das Leistungsmodul 50 mit Hilfe des Kommunikationsmoduls und/oder des Benutzerschnittstellenmoduls modular zu ergänzen, um bedarfsweise die Ladeeinheit 6 an die jeweiligen Anforderungen anpassen zu können.

Das Leistungsmodul 50 ist insbesondere in einem ersten Bereich des Bodens 41 angeordnet. In einem zweiten Bereich des Bodens 41 ist vorliegend ein Fixiermittel 62 vorgesehen, welches aus kammartig zueinander angeordneten Flanschen mit zueinander fluchtenden Öffnungen gebildet ist. Das dargestellte Fixiermittel 62 ist aus zwei einander gegenüberliegenden kammartigen Strukturen gebildet, welche eine Öffnung 64 im Boden 41 einfassen. Das mindestens eine Fixiermittel 62 korrespondiert zu mindestens einem Fixiermittel 66 eines Aufnahmekörpers 68 für eine Ladebuchse 70.

Die Ladebuchse 70 ist im montierten Zustand unmittelbar über der Öffnung 64 angeordnet. Durch die Öffnung 64 ist es möglich, von der Unterseite der Wannenbaugruppe 20, durch den Boden 41 eine manuelle Notentriegelung an der Ladebuchse 70 vorzunehmen.

Zur Montage des Befestigungskörpers 68 an der Wannenbaugruppe 20 wird der Montagekörper 68 mit seinen Fixiermitteln 66 zu den Fixiermitteln 62 so ausgerichtet, dass Stifte 72 durch die zueinander fluchtenden Öffnungen geschoben werden können. Dadurch fixieren die Stifte 72 den Aufnahmekörper 68 an dem Gehäuse der Wannenbaugruppe 20.

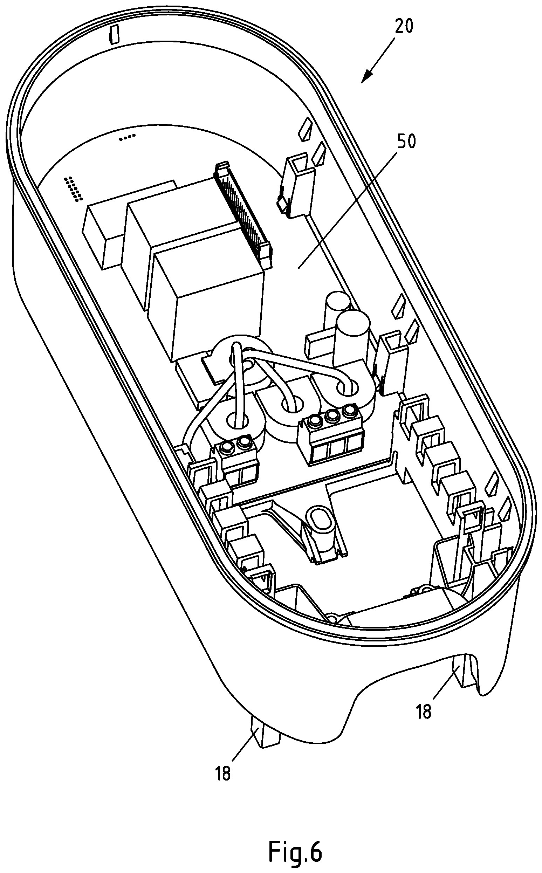

In einem teilmontierten Zustand ist das Leistungsmodul 50 bodenseitig in die Wannenbaugruppe 20 eingesetzt, wie die beispielhaft Figur 6 zeigt. Hierbei wird der Stecker 56 samt Kragen 58 durch die bodenseitige Öffnung 74 gesteckt. Das Leistungsmodul 50 ist mechanisch mit dem Gehäuse 29 der Wannenbaugruppe 20 verrastet und kann darin insbesondere schwimmend gelagert sein.

Alternativ oder kommutativ dazu ist es möglich, dass das Mains-Board 34 in dem Gehäuse der Dockingstation 4 schwimmend gelagert ist. Die schwimmende Lagerung hat den Vorteil, dass sich bei einer mechanischen Montage der Wannenbaugruppe 20 auf die Dockingstation 4 der Stecker 56 selbstständig zu der Buchse des Leistungsanschlusses 42 ausrichten kann. Dies erhöht die Bedienbarkeit und erleichtert insbesondere die Montage bzw. Befestigung der Ladeeinheit 6 an der Dockingstation 4 durch einen Laien.

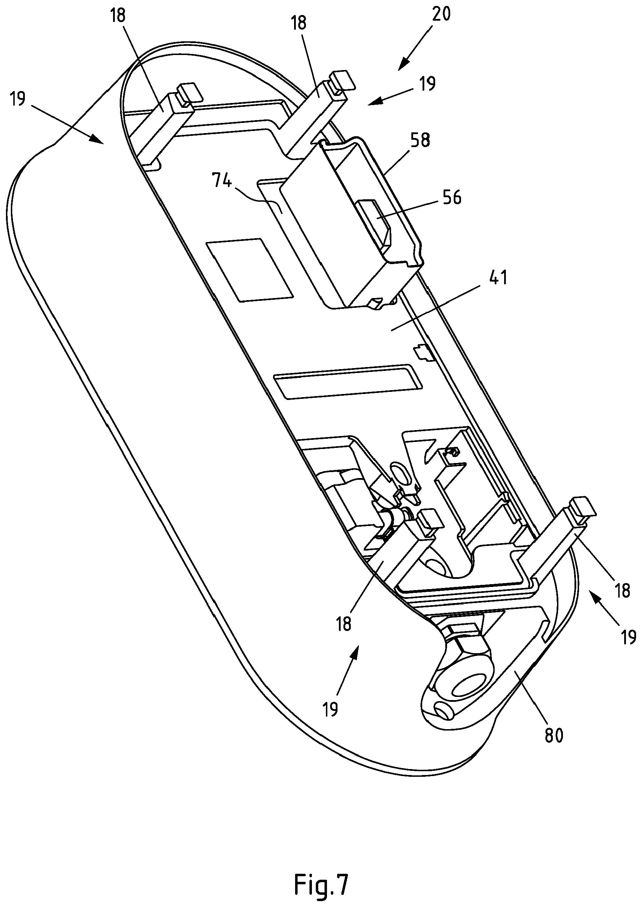

Die Unterseite der Wannenbaugruppe 20 ist in der Figur 7 beispielhaft dargestellt. Zu erkennen ist, dass die Ladeeinheit 6 eine Mehrzahl von Stegen 18 aufweist. Insbesondere ist in jedem Eckbereich 19 der Ladeeinheit 6, insbesondere der Wannenbaugruppe 20, jeweils ein Steg 18 angeordnet. Damit korrespondiert die jeweilige Position der Stege 18 zu der Position der Ausnehmungen (vgl. Fig. 3).

Insbesondere ist in der Figur 7 zu erkennen, dass die Stege 18 vom Boden 41 wegweisend aus der Wannenbaugruppe 20 herausragen. Ferner ist der Kragen 58 mit dem Stecker 56 zu erkennen, wie er durch die Öffnung 74 ragt.

Der Kragen 58 kommt im montierten Zustand der Ladevorrichtung 3 in Eingriff mit der Öffnung 14a. In der Öffnung 14a ist, wie in der Figur 4 zu erkennen ist, insbesondere ein Ringspalt 74, welcher zwischen der Buchse des Leistungsanschlusses 42 und einem in das Innere des Gehäuses der Dockingstation 4 ragenden Kragen 78 gebildet. Durch den Kragen 78 wird ein Berührschutz der Dockingstation 4 erreicht.

Während der Montage wird die Wannenbaugruppe 20 auf die Dockingstation 4 aufgesetzt, wobei, wie der Kombination der Figuren 4 und 7 zu entnehmen ist, der Kragen 58 dabei in den Ringspalt 76 gleitet. Der Kragen 58 gelangt in den Ringspalt 76, bevor ein Kontakt des Steckers 56 in elektrischen Kontakt mit einem Kontakt der Buchse des Leistungsanschlusses 42 kommt. Dies verhindert, dass es bei der Montage der Wannenbaugruppe 20 auf die Dockingstation 4 zu einem elektrischen Schlag kommen kann. Zudem wird die Ladeeinheit 6 derart ausgerichtet, dass die Stege 18 in die korrespondierenden Ausnehmungen eingreifen können.

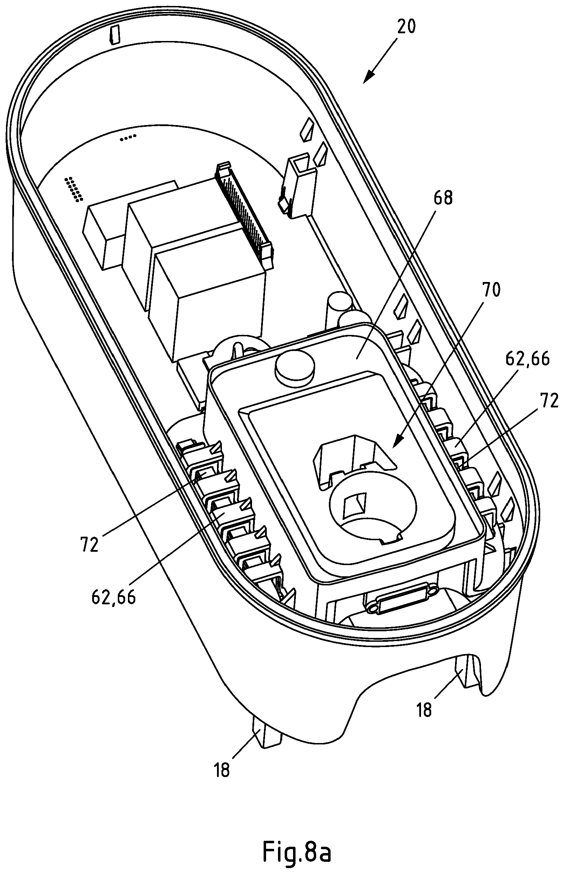

Der Aufnahmekörper 68 ist insbesondere dergestalt, dass er zur Aufnahme verschiedenster Ladebuchsen 70 eingerichtet ist oder anders gesagt, verschiedenste Ladebuchsen 70 können mit verschiedenen Aufnahmekörpern 68 ausgestattet sein, wobei jeweils die Fixiermittel 66 zueinander einen gleichen Abstand haben und somit eine einheitliche mechanische Schnittstelle zu den Fixiermitteln 62 bilden. Dies führt dazu, dass in ein und derselben Wannenbaugruppe 20 verschiedenste Ladebuchsen 70 installiert werden können, wie sich aus den Figuren 8a-c ergibt.

Dort ist zu erkennen, dass die Fixiermittel 62, 64 ineinander greifen und über die Stifte 72 miteinander mechanisch verrastet sind.

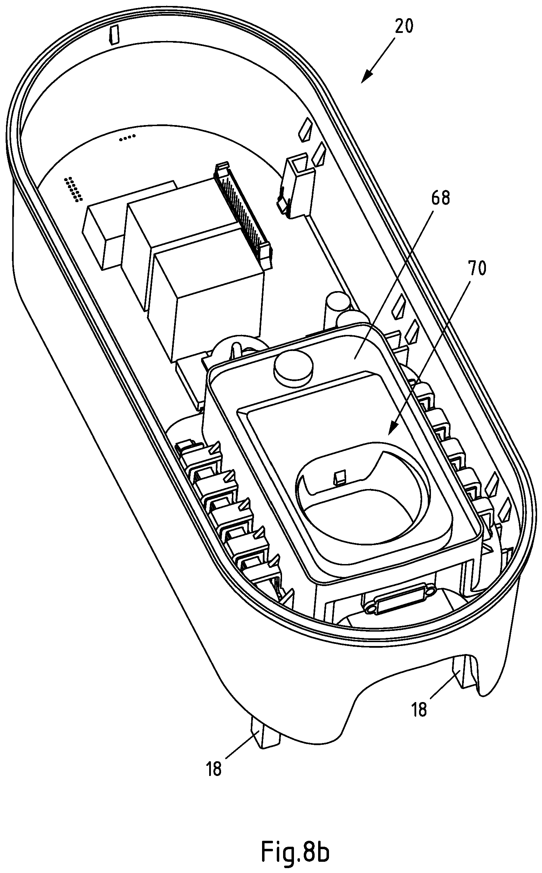

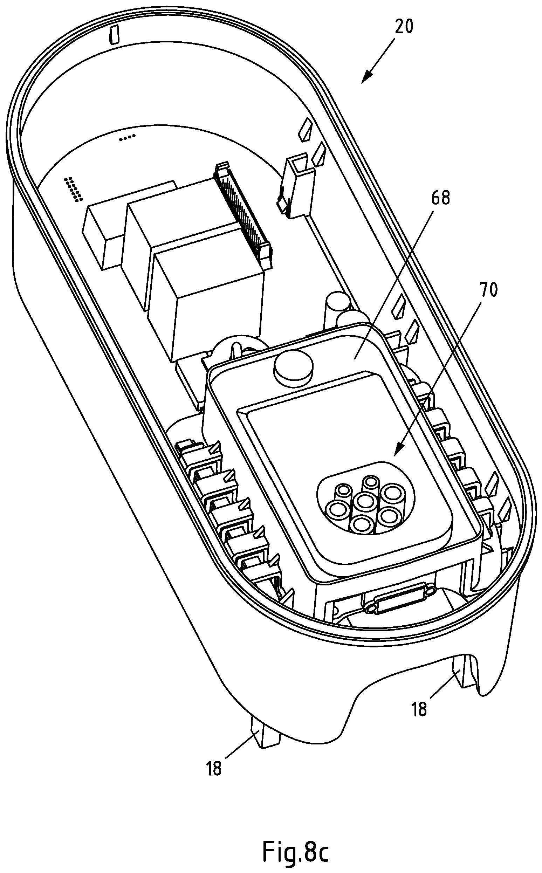

Die Figur 8a zeigt einen Aufnahmekörper 68 mit einer CCS-Ladebuchse 70 nach IEC 62196, Figur 8b zeigt einen Aufnahmekörper 68 mit einer Chademo Ladebuchse 70 und Figur 8c zeigt einen Aufnahmekörper 68 mit einer Typ2-Ladebuchse 70 nach IEC 62196-2.

Wie in den Figuren 8a-c zu erkennen ist, ermöglicht es der Aufnahmekörper 68 verschiedenste Ladebuchsen 70 aufzunehmen, ohne eine konstruktive Änderung an dem Gehäuse der Wannenbaugruppe 20 vornehmen zu müssen.

Die Ladebuchsen 70 müssen nicht zwingend elektrisch mit dem Ladeanschluss 52 verbunden werden, sondern können auch potentialfrei bleiben. In diesem Fall können die Ladebuchsen 70 als "Steckergarage" dienen. Der Ladeauslass 52 kann elektrisch mit einem fest an dem Gehäuse der Wannenbaugruppe 20 angeschlagenen Ladekabel verbunden werden. Das Ladekabel kann im Bereich eines Rücksprungs 80 in der Seitenwand der Wannenbaugruppe 20 herausgeführt sein.

Wird kein fest angeschlagenes Kabel verwendet, so kann die Ladebuchse 70 über den Ladeanschluss 52 elektrisch mit der Ladesteuerschaltung 54 verbunden werden. Der Ladeanschluss 52 verfügt über drei Anschlüsse für jeweils eine Phase auf einer Anschlussleiste, einer weiteren Anschlussleiste mit zwei Anschlüssen für den Nullleiter und den Schutzleiter und gegebenenfalls über eine Anschlussbuchse für einen Plug Present (PP) Kontakt und einen Pilotleiter (CP) Kontakt.

Zur Installation der Ladebuchse 70 wird der Aufnahmekörper 68 an der Wannenbaugruppe 20 angeordnet, über vorkonfektionierte Kabel wird die Ladebuchse 70 mit den jeweiligen Anschlüssen des Ladeauslasses 52 verbunden und anschließend wird der Aufnahmekörper 68 über die Stifte 72 in der Wannenbaugruppe 20 fixiert.

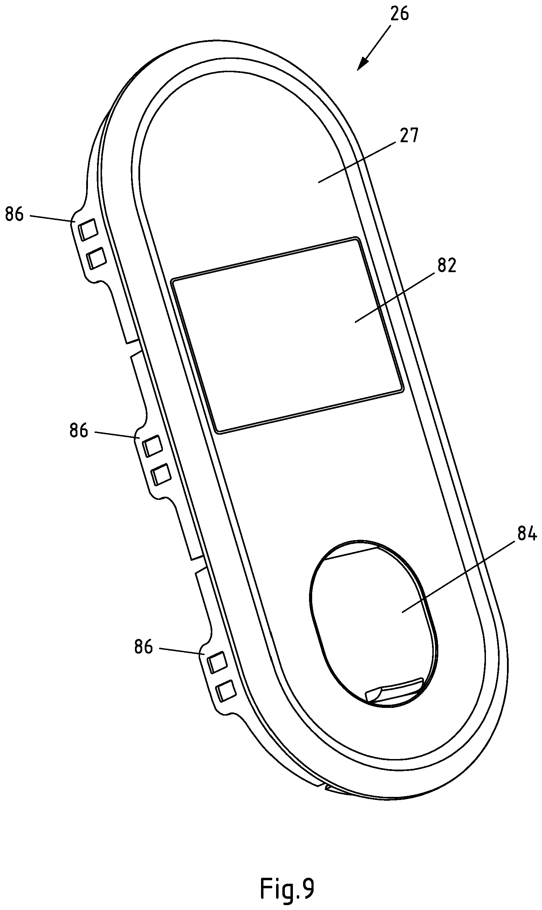

Die Ladeeinheit 6 umfasst neben der Wannenbaugruppe 20 auch die Deckelbaugruppe 26, wie sie in der Figur 9 beispielhaft dargestellt ist. Die Oberseite der Deckelbaugruppe 26 ist insbesondere als Deckel 27 gebildet und kann optional verschiedenste Bedienelemente 82 und/oder einen Shutter 84 auf einer Oberseite aufweisen. Seitlich der Deckelbaugruppe 26, an dessen Seitenrändern, können Rastelemente 86 vorgesehen sein, welche mit den inneren Seitenwänden der Wannenbaugruppe 20 in Eingriff gelangen können. Hierdurch lässt sich die Deckelbaugruppe 26 auf der Wannenbaugruppe 20 montieren.

Die Rastelemente 86 können so gestaltet sein, dass sie an den Seitenwänden der Wannenbaugruppe 20 verrasten und insbesondere nur dann zerstörungsfrei gelöst werden können, wenn sie von der Unterseite, ausgehend von dem Boden 41 der Wannenbaugruppe 20, gelöst werden. Dies verhindert, dass die Deckelbaugruppe 26 von der Wannenbaugruppe 20 gelöst wird, während die Wannenbaugruppe 20 noch elektrisch mit dem Mains-Board 34 der Dockingstation 4 verbunden ist.

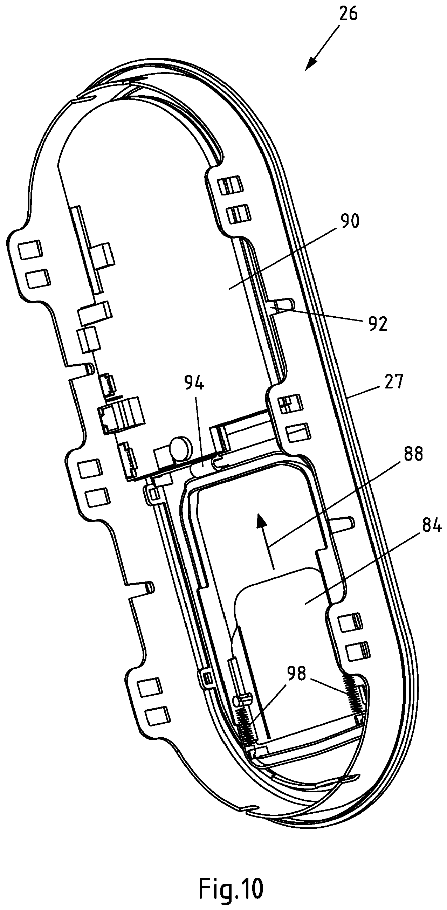

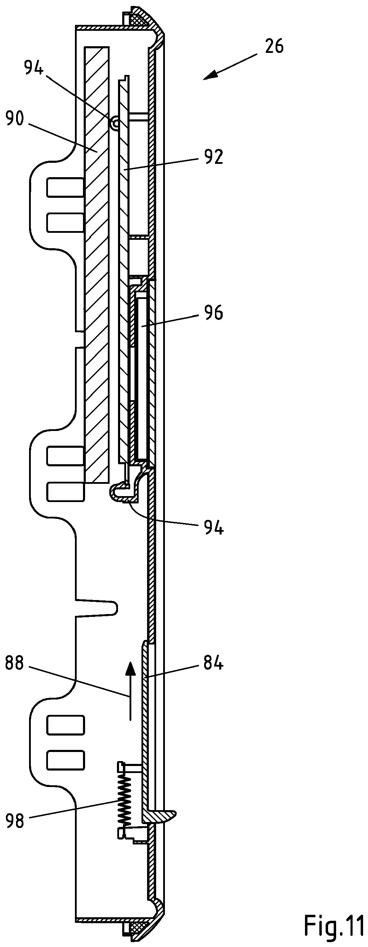

Rückseitig der Deckelbaugruppe 26 ist, wie in Figur 10 beispielhaft gezeigt, der Shutter 84 so gelagert, dass er in einer Bewegungsrichtung 88 bewegt werden kann, um die Ladebuchse 70 freizugeben. Der Shutter 84 ist, wie in der Figur 11 zu erkennen, über eine Feder 98 federbelastet, so dass dieser automatisch in die gezeigte geschlossene Position verfährt.

In einem weiteren Bereich sind in dem Gehäuse 29 der Ladeeinheit 6, vorzugsweise, wie in Figur 11 dargestellt, in der Deckelbaugruppe 26 ein Kommunikationsmodul 90 und ein Benutzerschnittstellenmodul 92 angeordnet. Das Kommunikationsmodul 90 als auch das Benutzerschnittstellenmodul 92 können an der Deckelbaugruppe 26 bzw. dessen Gehäuse 29 mechanisch fixiert werden.

Das Kommunikationsmodul 90 ist insbesondere eingerichtet, für die Ladeeinheit 6, insbesondere für die Ladestation, eine (Fernfeld- und/oder Nahfeld-) Kommunikation bereitzustellen. Insbesondere kann das Kommunikationsmodul 90 eine Kommunikationsantenne aufweisen, um eine drahtlose Kommunikation mit entfernt von der Ladestation positionierten Geräten (z.B. Backendsystem, mobiles Nutzerendgerät etc.) durchführen zu können. Die mindestens eine Kommunikationsantenne kann eine Fernfeldantenne oder eine Nahfeldantenne sein, beispielsweise eine LTE Antenne, GSM Antenne, WLAN Antenne, Bluetooth Antenne und/oder GPS Antenne.

Das Kommunikationsmodul 90 ist (für eine interne Kommunikation) vorzugsweise über den Kommunikationsbus mit dem Leistungsmodul 50 und insbesondere dem Benutzerschnittstellenmodul 92 verbunden.

Das Kommunikationsmodul 90 kann darüber hinaus optional eine nicht näher dargestellte Ladesteuerschaltung aufweisen, die elektrischen Zugriff auf den Ladeanschluss 52 hat. Die Ladesteuerschaltung kann die Ladesteuerschaltung 54 überregeln oder zumindest mit dieser gekoppelt sein, so dass die beiden Ladesteuerschaltungen koordiniert eine Steuerung eines Ladevorgangs vornehmen können.

Figur 11 zeigt eine bevorzugte Ausführungsanordnung des Kommunikationsmoduls 90 und des Benutzerschnittstellenmoduls 92 in dem Gehäuse 29, vorzugsweise in der Deckelbaugruppe 26. Das Benutzerschnittstellenmodul 92 ist insbesondere der Innenseite des Deckels 27 zugewandt und vorzugsweise mechanisch an dem Gehäuse 29 der Deckelbaugruppe 26 über z.B. Klick-Verbindungen 94 verbunden. Das Kommunikationsmodul 90 ist seinerseits ebenfalls über nicht näher dargestellte Verbindungen mit dem Gehäuse 29 der Deckelbaugruppe 26 verbunden. Ausgehend von dem Deckel 27 sind zunächst das Benutzerschnittstellenmodul 92 und dann das Kommunikationsmodul 90 gestapelt angeordnet.

Die mindestens eine auf dem Kommunikationsmodul 90 angeordnete (nicht gezeigte) Kommunikationsantenne kann, ausgehend von dem Deckel 27, durch das Benutzerschnittstellenmodul 92 zumindest teilweise, vorzugsweise überwiegend, unverdeckt sein. Insbesondere kann zumindest 50 % der Antennenfläche der Kommunikationsantenne, vorzugsweise zumindest 70 % der Antennenfläche der Kommunikationsantenne, insbesondere bevorzugt 100 % der Antennenfläche der Kommunikationsantenne, unverdeckt sein.

Das Benutzerschnittstellenmodul 92 ist vorzugsweise ortsfest zu der Innenseite der Deckelbaugruppe 26 angeordnet, so dass eine exakte Positionierung des mindestens einen Bauelements des Benutzerschnittstellenmoduls 92, insbesondere der mindestens einen Benutzerschnittstellenantenne, zu dem Deckel 27 bzw. der Oberseite 27 der Deckelbaugruppe 26 gewährleistet ist. Insbesondere ein Display 96 kann als Option in der Deckelbaugruppe 26 angeordnet sein und über das Benutzerschnittstellenmodul 92 und/oder das Kommunikationsmodul 90 angesteuert werden.

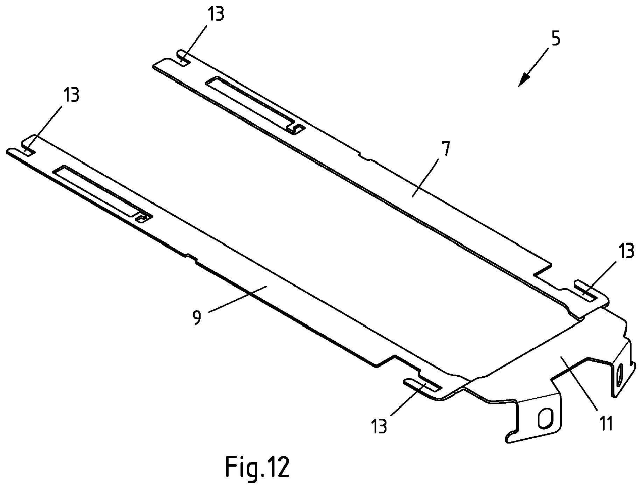

Die Figur 12 zeigt ein Ausführungsbeispiel eines Verriegelungsmoduls 5 gemäß der vorliegenden Anmeldung. Vorliegend ist das Verriegelungsmodul 5 als Verriegelungsbügel 5 gebildet. Ein Verriegelungsbügel 5 kann insbesondere U-förmig gebildet sein und vorzugsweise zwei im Wesentlichen parallel zueinander verlaufende Schenkel 7, 9 und im Wesentlichen identisch dimensionierte Schenkel 7, 9 aufweisen, die über ein Verbindungselement 11 miteinander verbunden sind. Das Verbindungselement 11 ist insbesondere zumindest teilweise der Teilbereich 11 des Verriegelungsmoduls 5, der zumindest im montierten Zustand der Ladeeinheit 6 an der Dockingstation 4 außerhalb von diesen angeordnet ist.

Das Verbindungselement 11 stellt vorzugsweise ein/eine Griffelement bzw. -funktion bereit, welche/s von einem Nutzer betätigt werden kann, um das Verriegelungsmodul 5 zwischen einer Verriegelungsposition und einer geöffneten Position zu bewegen.

Darüber hinaus weist das Verriegelungsmodul 5 eine Mehrzahl von zweiten Verriegelungselementen 13, insbesondere Verrastelementen 13, auf. Vorliegend sind die Verriegelungselemente 13 als Ausnehmungen 13 bzw. Öffnungen 13 in den Schenkeln 7, 9 gebildet.

Im vorliegenden Ausführungsbeispiel sind vier Verriegelungselemente 13 vorgesehen, deren jeweilige Position zu den Positionen der Ausnehmungen 16 der Dockingstation 4 und zu den Positionen der Stege 18 der Ladeeinheit 6 korrespondieren, um so eine Fixierung der Stege 18 an der Dockingstation 4 zu ermöglichen, wie noch näher beschrieben wird.

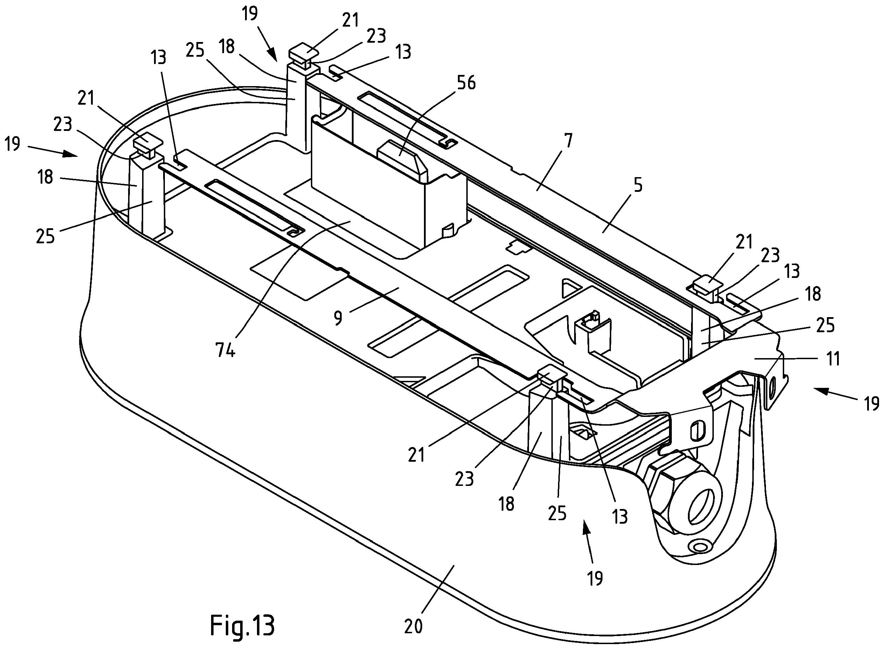

Figur 13 zeigt eine schematische Ansicht eines Ausführungsbeispiels einer Ladeeinheit 6, insbesondere einer Wannenbaugruppe 20, mit einem Verrieglungsmodul 5 in einer geöffneten Position. Hierbei sei angemerkt, dass zu Gunsten einer besseren Übersicht die Dockingstation 4, an der die Ladeeinheit 6 durch das Verrieglungsmodul 5 fixiert wird, nicht dargestellt ist.

Ein Steg 18 ist an dem Boden der Wannenbaugruppe 20 über einen Stegabschnitt 25 befestigt. An den Stegabschnitt 25 schließt sich als erstes Verriegelungselement 21, 23 vorliegend ein Zapfenabschnitt 23 und dann ein Verriegelungskopf 21 an. Die Dicke bzw. der Außendurchmesser des Zapfenabschnitts 23 ist geringer als die Dicke bzw. der Außendurchmesser des Verriegelungskopfes 21. Die Dicke bzw. der Außendurchmesser des Zapfenabschnitts 23 korrespondiert hierbei mit dem Durchmesser einer entsprechenden Ausnehmung 13, so dass der Zapfenabschnitt 23 in die Ausnehmung einführbar ist. Der Außendurchmesser des Zapfenabschnitts 23 ist jedoch geringer als der Außendurchmesser des Verriegelungskopfes 21.

In der dargestellten geöffneten Position erlaubt das Verriegelungsmodul 5 ein Einsetzen der Stege 18 in die (nicht dargestellten) Ausnehmungen der Dockingstation 4 derart, dass die Stege 18 eine Verrastposition erreichen bzw. sich in dieser befinden.

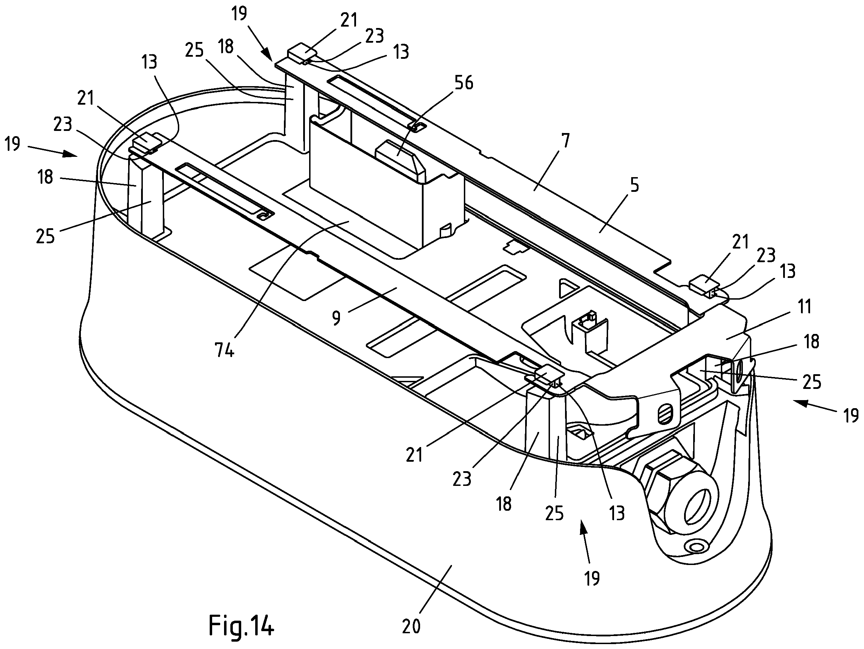

Figur 14 zeigt das Ausführungsbeispiel nach Figur 13, bei dem sich das Verrieglungsmodul 5 in einer Verriegelungsposition befindet. Insbesondere kann aus den Figuren 13 und 14 entnommen werden, dass durch eine Bewegung des Verrieglungsmoduls 5 von der geöffneten Position (Fig. 13) in die Verriegelungsposition (entlang einer Geraden) (Fig. 14) die Stege 18 fixiert werden. Insbesondere hintergreifen die jeweiligen Ausnehmungen 13 die jeweiligen Verriegelungsköpfe 23 und fixieren hierdurch die Stege 18 an der Dockingstation 4 formschlüssig. Insbesondere ist eine Bewegung der Stege 18 in einer Richtung längs der Stegachse aufgrund der Verrastung der ersten und zweiten Verriegelungselemente miteinander blockiert, so dass die Stege 18 nicht aus den jeweiligen Ausnehmungen 16 (ohne ein Bewegen des Verrieglungsmoduls 5 von der Verriegelungsposition in die geöffneten Position) herausgeführt werden können.

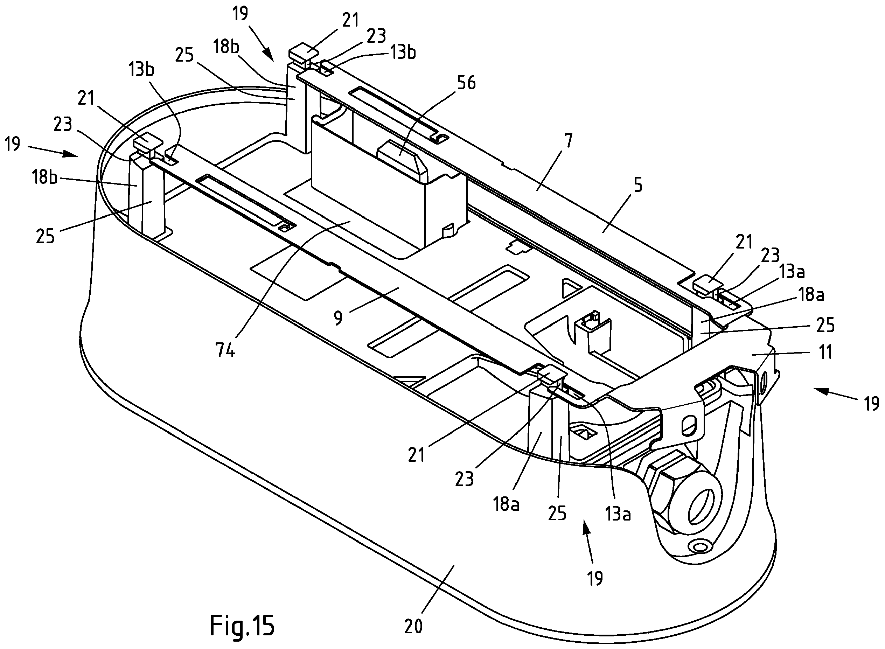

Figur 15 zeigt eine schematische Ansicht des Ausführungsbeispiels der Ladeeinheit 6 entsprechend den Figuren 13 und 14 mit dem Verrieglungsmodul 5 in einer optionalen Verriegelungszwischenposition. Wie zu erkennen ist, sind die Ausnehmungen 13a, 13b so gebildet, dass in der Verriegelungszwischenposition nur die ersten Ausnehmungen 13a die ersten Stege 18a formschlüssig fixieren, während die zweiten Stege 18b noch nicht durch die zweiten Ausnehmungen 13b verriegelt sind.

Dies erlaubt es einem Nutzer bei der Montierung der Ladeeinheit 6 zunächst, durch Aufwenden einer Kraft im vorliegend unteren Bereich, die ersten Stege 18a in entsprechende (nicht dargestellte) Ausnehmungen der Dockingstation einzuführen, bis sie die Verrastposition erreichen. Die weiteren Stege 18b müssen die Verrastposition noch nicht erreicht haben, jedoch kann das Verriegelungsmodul 5 bereits von der geöffneten Position in die dargestellte Verriegelungszwischenposition bewegt werden, um die ersten Stege 18a an der Dockingstation durch die Ausnehmungen 13a zu verrasten.

Anschließend kann der Nutzer, durch Aufwenden einer Kraft im vorliegend oberen Bereich, die zweiten Stege 18b in entsprechende (nicht dargestellte) Ausnehmungen der Dockingstation einzuführen, bis sie die Verrastposition erreichen. Dann kann das Verriegelungsmodul 5 weiter bewegt werden bis zu der in Figur 14 dargestellten Verriegelungs(end)position, in der sämtliche Stege 18 an der Dockingstation 4 formschlüssig fixiert sind. Eine besonders einfache Montage der Ladevorrichtung 3 kann bereitgestellt werden.

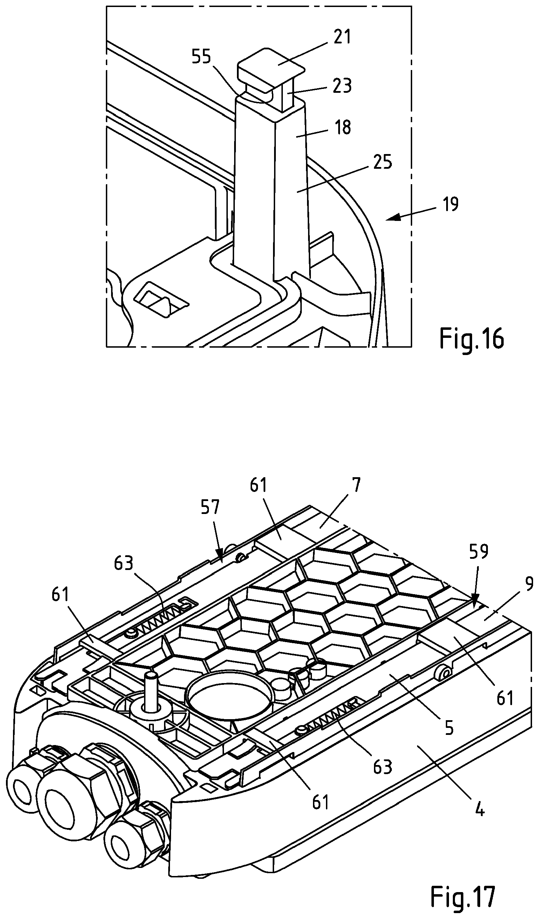

Figur 16 zeigt beispielhaft eine schematische Detailansicht eines Stegs. Der Steg 18 kann eine im Wesentlichen rechteckförmige Grundfläche aufweisen. Um ein Einrutschen bzw. ein Einstecken der Stege 18, insbesondere des Zapfenabschnitts 23, in die jeweilige Ausnehmung 13 zu unterstützen, weist der Verriegelungskopf vorzugsweise eine abgeschrägte Fläche 55 auf.

Die abgeschrägte Fläche 55 ist insbesondere an der Seite des Verriegelungskopfes 21 angeordnet, die in der geöffneten Position des Verriegelungsmoduls 5 dem (jeweiligen) zweiten Verriegelungselement 13 zugewandt ist. Durch die Schräge der abgeschrägten Fläche 55 kann die jeweilige Ausnehmung 13 das erste Verriegelungselement 21, 23 leichter hintergreifen. Ein Verklemmen des Verriegelungsmoduls 5 bei einer Bewegung von der geöffneten Position in die Verriegelungsposition kann verhindert werden. Insbesondere können sämtliche Verriegelungsköpfe (bzw. -dome) entsprechend ausgebildet sein.

Figur 17 zeigt eine schematische Ansicht eines Ausführungsbeispiels einer Dockingstation 4 mit einem Verrieglungsmodul 5. Das Verriegelungsmodul 5 ist insbesondere in Führungen 57, 59 gelagert. Insbesondere ist vorliegend für jeden Schenkel 7, 9 jeweils eine Führung 57, 59 vorgesehen, die zu dem jeweiligen Schenkel 7, 9, insbesondere hinsichtlich Form und Dimensionierung, korrespondiert. Die Halteelemente 61 dienen dazu, dass das Verriegelungsmodul 5 dauerhaft in der Dockingstation 4, also in jeglichem Betriebszustand, integriert bleibt. Insbesondere verbleibt das Verriegelungsmodul 5 während aller Betriebsfälle in der Dockingstation 4.

Darüber hinaus sind in weiteren Ausnehmungen der Schenkel 7, 9 jeweils mindestens ein Federelement 63 angeordnet. Insbesondere sind zwischen dem Verriegelungsmodul 5 und der Dockingstation 4 vorliegend zwei Federelemente 63 derart befestigt, dass in der geöffneten Position eine in Richtung der Verrieglungsposition wirkende Kraft auf das Verriegelungsmodul 5 durch das Federelement 63 ausgeübt wird.

Insbesondere kann hierdurch ein automatisches Verfahren des Verriegelungsmoduls 5 von der geöffneten Position in die Verriegelungsposition bereitgestellt werden, wenn die Stege 18 in der Verrastposition sind. Beispielsweise kann zwischen jedem Schenkel 7, 9 und der Dockingstation 4 ein Federelement 63 vorgesehen sein.

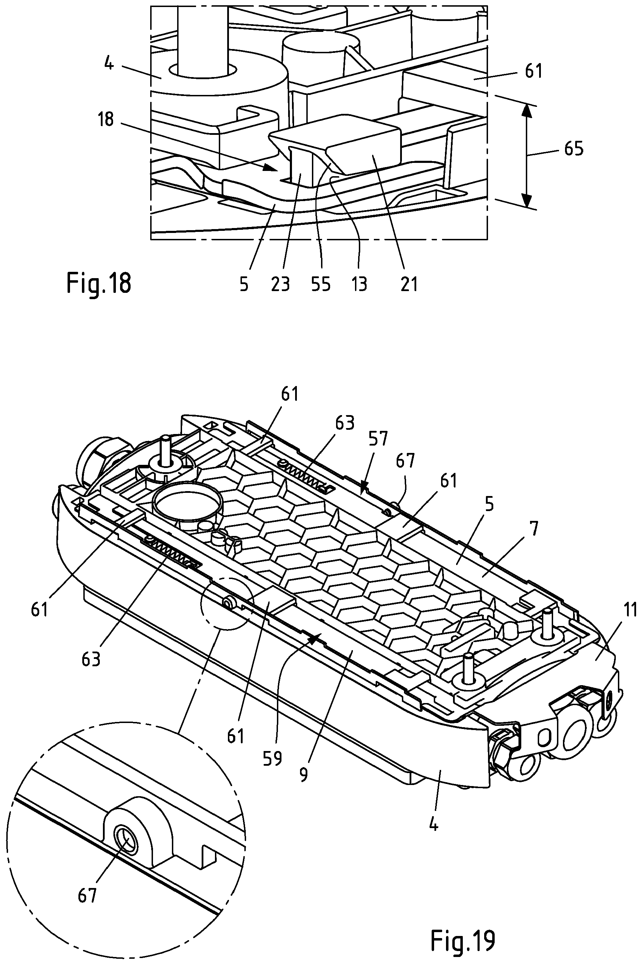

Figur 18 zeigt eine schematische Detailansicht eines bevorzugten Ausführungsbeispiels eines Stegs 18 in einem verriegelten Zustand. Wie zu erkennen ist, greift der Steg 18 derart in das Verriegelungsmodul 5 ein, dass eine formschlüssige Fixierung der Ladeeinheit 6 an der Dockingstation 4 erfolgt.

Der mit dem Bezugszeichen 65 versehene Pfeil deutet an, dass in der verriegelten Position, insbesondere in dem dargestellten montierten Zustand der Ladevorrichtung 3, also wenn die Ladeeinheit 6 an der Dockingstation 4 befestigt ist, ein Druck ausgeübt wird, der eine dauerhafte Abdichtung zwischen Ladeeinheit 6 und Dockingstation 4 unter Verwendung eines (nicht gezeigten) Dichtungselements erlaubt.

Insbesondere kann in der Verriegelungsposition bzw. dem montierten Zustand der Ladevorrichtung 3 eine Verklemmung des Dichtungselements (z.B. eine Kompression einer Schaumdichtung oder dergleichen) zwischen Ladeeinheit 6, insbesondere der Wannenbaugruppe 20 der Ladeeinheit 6, und der Dockingstation 4, insbesondere dem Schutzdeckelgehäuse 12 der Dockingstation 4, bereitgestellt und insbesondere in dem montierten Zustand der Ladevorrichtung 3 beibehalten werden.

Figur 19 zeigt eine schematische Ansicht eines Ausführungsbeispiels der Dockingstation 4 mit einem Verrieglungsmodul 5 und optionalen Fixierungselementen 67. Insbesondere können als Fixierungselemente 67 an der Seitenwand der Dockingstation 4 Verschraubungen 67 vorgesehen sein. Insbesondere kann in eine entsprechende Aufnahme in der Dockingstation 4 eine Schraube 67 eingedreht werden, wenn sich das Verriegelungsmodul 5 in der Verriegelungsposition befindet. Durch ein Einsetzen der Fixierungselemente 67 kann ein Bewegen des Verrieglungsmoduls 5, insbesondere von der Verriegelungsposition in die geöffnete Position, blockiert werden.

Wie aus den vorherigen Figuren ersichtlich, ist das Verriegelungsmodul 5 zumindest teilweise in der Dockingstation 4 integriert. Insbesondere sind zumindest die Schenkel 7, 9 in der Dockingstation 4 (fest) integriert. Für eine einfache Montierung und Arretierung, insbesondere für ein zuvor beschriebenes Bewegen des Verriegelungsmoduls 5 zwischen der geöffneten Position und der Verriegelungsposition, wobei die Ladeeinheit 6 in der Verriegelungsposition an der Dockingstation 4 arretiert ist, weist das Verriegelungsmodul einen außerhalb der Dockingstation 4 befindlichen Teilbereich 11 auf.

Um zu verhindern, dass Unbefugte nach einer Arretierung der Ladeeinheit 6 an der Dockingstation 4 die Ladeeinheit 6 lösen, wird anmeldungsgemäß vorgeschlagen, den außerhalb der Dockingstation 4 befindlichen Teilbereich 11 des Verriegelungsmoduls 5 mit einem Schutzgehäuse 69, zumindest nach einer Befestigung der Ladevorrichtung 3 an einem Trägerelement 2a, zu verdecken, so dass der Zugriff auf den genannten Teilbereich 11 blockiert ist.

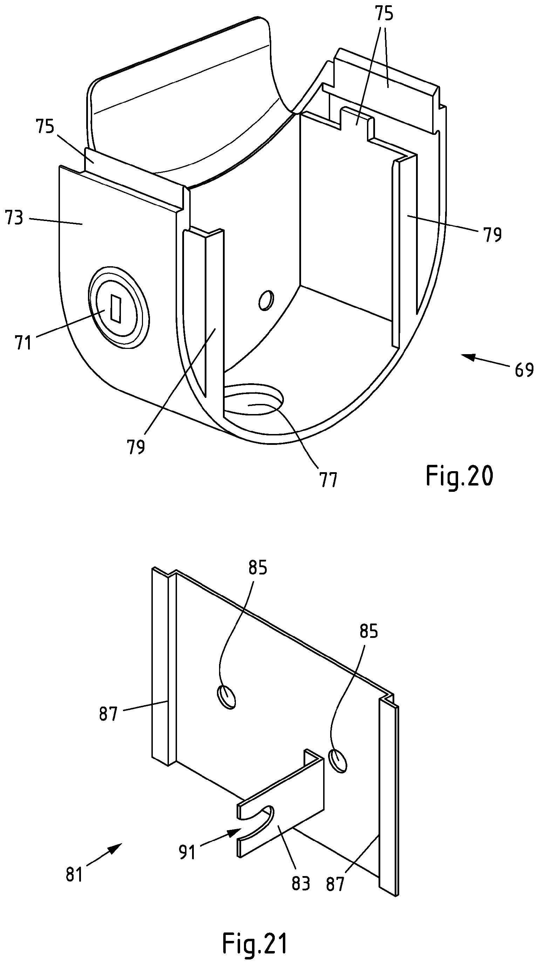

Die Figur 20 zeigt eine schematische Ansicht eines Ausführungsbeispiels eines Schutzgehäuses 69. Das Schutzgehäuse 69 weist einen bogenförmigen Boden und drei Seitenwände 73 auf. Im befestigten Zustand des Schutzgehäuses 69 wird die vierte Seitenwand von einem Sperrteil 81 und/oder dem Trägerelement 2a gebildet. Der Deckel kann im befestigten Zustand des Schutzgehäuses 69 durch die Ladeeinheit 6 und/oder die Dockingstation 4 gebildet sein. Hierdurch ist der genannte Teilbereich 11 des Verriegelungsmoduls 5 im befestigten Zustand des Schutzgehäuses 69 vollständig verdeckt, insbesondere vollständig umschlossen.

Das Schutzgehäuse 69 kann vorzugsweise ein Aluminiumdruckgussgehäuse 69 sein. In einer Seitenwand 73 kann ein Teil eines Schlossmechanismus 71 eingebaut sein, wie nachfolgend noch näher erläutert werden wird.

Ferner weist das Schutzgehäuse 69, insbesondere im Bereich der oberen Katen der Seitenwände 73, mindestens einen Vorsprung 75 auf. Die Ladeeinheit 6 und/oder die Dockingstation 4 kann mindestens eine zu dem mindestens einen Vorsprung 75 korrespondierende Ausnehmung (bzw. Aussparung) aufweisen. In dem befestigten Zustand des Schutzgehäuses 69 kann der mindestens eine Vorsprung 75 in der mindestens einen Ausnehmung zumindest teilweise eingesetzt sein.

Ferner kann das Schutzgehäuse 69 über weitere Verlängerungen bzw. Vorsprünge an mindestens einer Seitenwand 73 verfügen, die in hierzu korrespondierende Aussparungen (z.B. in Form einer Nut) der Ladeeinheit 6 und/oder (bevorzugt) die Dockingstation 4 im befestigten Zustand eingesetzt sind. Alternativ oder zusätzlich können mindestens ein Raststück und ein hierzu korrespondierendes Gegenstück vorgesehen sein, um eine Rastverbindung zwischen Schutzgehäuse 69 und vorzugsweise Dockingstation 4 bereitzustellen. Beispielsweise kann anstelle eines Vorsprungs ein Raststück vorgesehen sein.

Im bogenförmigen Boden ist in dem dargestellten Ausführungsbeispiel eine Ausnehmung 77 vorgesehen. Die Ausnehmung 77 ist insbesondere eine Energieversorgungskabelöffnung 77, durch die ein Energieversorgungskabel 89 geführt werden kann. Der Innendurchmesser der Energieversorgungskabelöffnung 77 entspricht im Wesentlichen dem Außendurchmesser des Energieversorgungskabels 89. Insbesondere liegt der Außenmantel im bestimmungsgemäßen Betrieb der Ladevorrichtung 3 unmittelbar an der Innenwand der Energieversorgungskabelöffnung 77 an, so dass ein Durchgriff durch einen Unbefugten durch die Energieversorgungskabelöffnung 77 in das Innere des Schutzgehäuses 69 im befestigten Zustand blockiert ist.

Zwei Seitenwände 73 weisen im vorliegenden Ausführungsbeispiel je eine (vertikal) verlaufende zweite Kante 79 auf. Eine zweite Kante 79 ist vorliegend L-förmig gebildet. Anders ausgedrückt weist eine (freie) zweite Kante 79 ein Winkelprofil auf. Eine zweite Kante 79 korrespondiert insbesondere zu einer ersten (Seiten-)Kante eines Sperrteils 81.

Figur 21 zeigt ein Ausführungsbeispiel eines Sperrteils 81. Das Sperrteil 81 ist insbesondere ein Blechteil 81. Von der Oberfläche des Bleichteils 81 erstreckt sich im vorliegenden Ausführungsbeispiel ein erstes Sperrelement 83 mit einer Sperraufnahme 91, insbesondere eine Aussparung 91. Das Sperrelement 83 kann ein Blechelement 83 sein, welches beispielsweise auf der Oberfläche des Sperrteils 81 angeschweißt ist.

Das Sperrteil 81 weist eine im Wesentlichen rechteckförmige Grundfläche mit vier Seitenkanten auf. Im vorliegenden Ausführungsbeispiel sind zwei erste Seitenkanten 87 Z-förmig gebildet. Anders ausgedrückt weist eine (freie) erste Kante 87 ein Z-Profil auf. Eine entsprechende erste Kante 87 korrespondiert zu einer zweiten Kante 79. Insbesondere kann in einem befestigten Zustand eine zweite Kante 79 eine entsprechende erste Kante 87 hintergreifen.

Das Sperrteil 81 weist vorliegend, insbesondere für eine Befestigung an einem Trägerelement 2a, mindestens eine Öffnung 85 (vorzugsweise zwei Öffnungen 85) auf, durch die beispielsweise eine Schraube oder dergleichen geführt werden kann. Im montierten Zustand des Sperrteils 81 bildet eine erste Kante 87 zusammen mit der Oberfläche des Trägerelements 2a eine Nut, in die eine zweite Kante 79 eingreifen kann. Insbesondere kann das Schutzgehäuse 69 durch die zwei gebildeten Nuten definiert in eine Befestigungsposition, insbesondere eine Endposition, des Schutzgehäuses 69 geführt werden.

Vorliegend ist das Sperrteil 81 als separates Teil gebildet, welches nicht mit der Dockingstation 4 oder der Ladeeinheit 6 verbunden ist. Bei anderen Varianten kann das Sperrteil auch an der Dockingstation 4 oder der Ladeeinheit 6 (dauerhaft) befestigt sein.

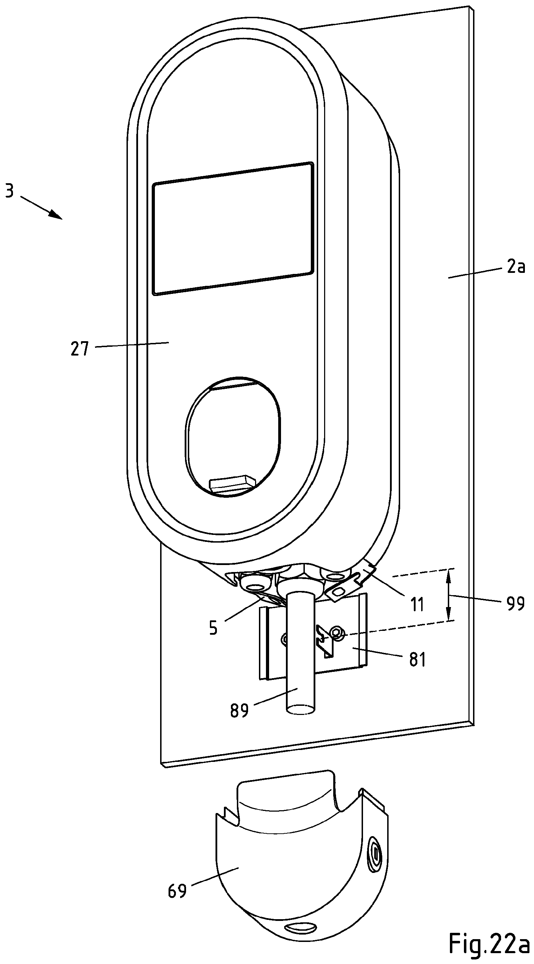

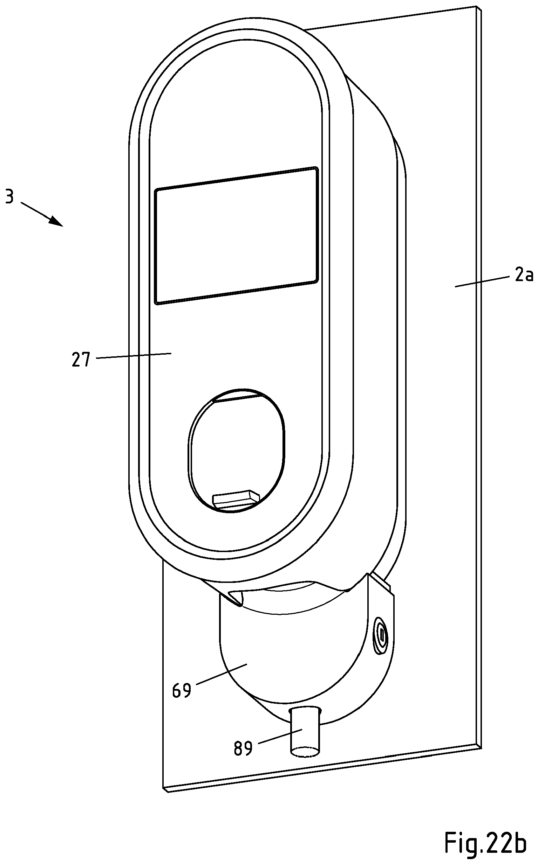

Die Figuren 22a und 22b zeigen ein Ausführungsbeispiel einer Ladevorrichtung 3, bei dem sich das Schutzgehäuse 69 in einem unbefestigten Zustand (Fig. 22a) und in einem befestigten Zustand (Fig. 22b) befindet.

Die Ladevorrichtung 3 befindet sich im montierten Zustand. Dies meint, dass die Ladeeinheit 6 an der Dockingstation 4 arretiert ist und die Dockingstation 4 an einem Trägerelement 2a befestig ist. Hierbei ist zu erkennen, dass ein Teilbereich 11 des Verriegelungsmoduls 5 sichtbar und insbesondere zugänglich ist. Anders ausgedrückt befindet sich ein Teilbereich 11 des Verriegelungsmoduls 5 außerhalb der Dockingstation 4 und der Ladeeinheit 6.

Aus der Figur 22a ist ferner ersichtlich, dass ein Sperrteil 81 (vgl. Fig. 21) ebenfalls an dem Trägerelement 2a befestigt. Das Sperrteil 81 ist in diesem montierten Zustand insbesondere positionsunveränderlich angeordnet, zumindest in Bezug zu der Dockingstation 4. Insbesondere ist ein bestimmter Abstand 99 zwischen der Dockingstation 4 (z.B. einem unteren Ende bzw. untere Kante der Dockingstation 4) und dem Sperrteil 81 (beispielsweise dem oberen Ende bzw. der oberen Kante des ersten Sperrelements 83) gegeben.

Zur Befestigung des Schutzgehäuses 69 können die zweiten Kanten 79 die ersten Kanten hintergreifen und das Schutzgehäuse 69 kann in Richtung Dockingstation 4 geführt werden, bis insbesondere der mindestens eine Vorsprung 75 verrastet in eine entsprechende Ausnehmung der Dockingstation 4 greift. Anschließend kann das Schutzgehäuse 69 zusätzlich durch den Schlossmechanismus 71 unter Nutzung eines (nicht gezeigten) Schlüssels verschlossen werden. Wie aus Figur 22b entnommen werden kann, ist der Zugriff auf den Teilbereich 11 des Verriegelungsmoduls 5 im befestigten Zustand des Schutzgehäuses 69, insbesondere in einem verschlossenen Zustand des Schlossmechanismus 71, blockiert.

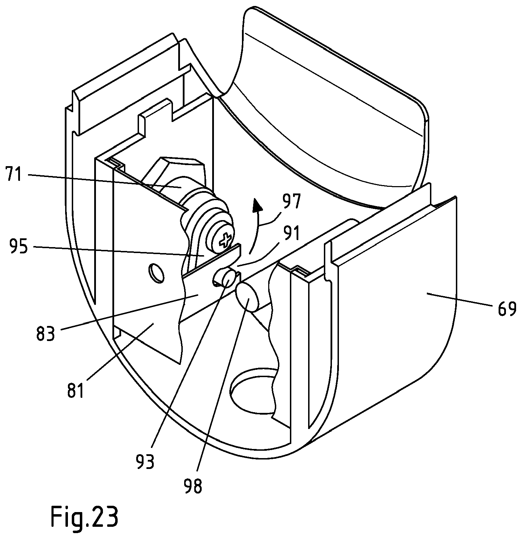

Die Figur 23 zeigt eine schematische Ansicht eines (weiteren) Ausführungsbeispiels des Schutzgehäuses 69 und des Sperrteils 81. Zu Gunsten einer besseren Übersicht wurden weitere Komponenten der Ladevorrichtung 3 nicht dargestellt. Wie zu erkennen ist, befindet sich der Schlossmechanismus 71 im verschlossenen (bzw. gesperrten) Zustand, insbesondere wirken das erste Sperrelement 83 (bzw. dessen Sperraufnahme 91) und das zweite Sperrelement 93 (insbesondere ein bewegbarer Sperrzapfen 93) in einem geschlossenen Zustand der Sperrelemente, also wenn der Sperrzapfen 93 in die Sperraufnahme 91 eingreift, zusammen, derart, dass ein Bewegen des Schutzgehäuses 69 blockiert ist. Durch Drehen eines Schlüssels kann der Sperrzapfen 93 (mittels eines Übersetzungselements 95 bzw. einem Verbindungselement 95 des Schlossmechanismus 71 und des Schlosszylinders) aus der geschlossenen Position in eine unverschlossene Position (angedeutet durch den Pfeil 97) bewegt werden (und vice versa).

Ferner ist optional ein Anschlagselement 98 vorgesehen, dass insbesondere an einer Innenwand des Schutzgehäuses 69 angeordnet ist. In dem befestigten Zustand des Schutzgehäuses 69 blockiert das Anschlagselement 98 zumindest ein Bewegen des Verriegelungsmoduls 5 in die geöffnete Position.

### Bezugszeichenliste

- 2: Ladeanordnung
- 2a: Trägerelement
- 3: Ladevorrichtung
- 4: Dockingstation
- 5: Verriegelungsmodul
- 6: Ladeeinheit
- 7: Schenkel des Verriegelungsmoduls
- 8: Kabeleinführung
- 9: Schenkel des Verriegelungsmoduls
- 10: Seitenwand
- 11: Verbindungselement des Verriegelungsmodul
- 12: Deckel
- 13: Zweites Verriegelungselement, insbesondere ein Verrastelement
- 14: Ausnehmung
- 16: Ausnehmung bzw. Öffnung
- 18: Steg
- 20: Wannenbaugruppe
- 21: erstes Verriegelungselement, insbesondere ein Verrastelement
- 22: Leistungsmodul
- 23: Zapfenabschnitt
- 24: Ladebuchse
- 25: Stegabschnitt
- 26: Deckelbaugruppe
- 27: Deckel
- 28: Rastelemente
- 29: Gehäuse
- 30: Rastelemente
- 32: Seitenwände
- 34: Mains-Board
- 36: Interface-Board
- 38: Anschlussleiste
- 39: Seitenwand
- 40: Skala
- 41: Boden
- 42: Leistungsanschluss
- 44: Aufnahme
- 46: Anschlussbuchse
- 48: Anschlüsse
- 50: Leistungsmodul
- 52: Ladeanschluss
- 54: Ladesteuerschaltung
- 55: Schrägfläche
- 56: Stecker
- 57: Führung
- 58: Kragen
- 59: Führung
- 60: Anschluss
- 61: Führungselement
- 62: Fixiermittel
- 63: Federelement
- 64: Öffnung
- 65: Fixierungselement
- 66: Fixiermittel
- 68: Aufnahmekörper
- 69: Schutzgehäuse
- 70: Ladebuchse
- 71: Schlossmechanismus
- 72: Stift
- 73: Seitenwände des Schutzgehäuses
- 74: Öffnung
- 75: Vorsprung
- 76: Ringspalt
- 77: Energieversorgungskabelöffnung
- 78: Kragen
- 79: Zweite Kante
- 80: Rücksprung
- 81: Sperrteil
- 82: Bedienelement
- 83: Erstes Sperrelement
- 84: Shutter
- 85: (Schrauben-)Öffnung
- 86: Rastelement
- 87: Erste Kante
- 88: Richtung
- 89: Energieversorgungskabel
- 90: Kommunikationsmodul
- 91: Sperraufnahme
- 92: Benutzerschnittstellenmodul
- 93: Zweites Sperrelement
- 94: Click-Verbindung
- 95: Übersetzungselement
- 96: Display
- 97: Bewegungsrichtung
- 98: Anschlagselement
- 99: Abstand zwischen Dockingstation und Sperrteil

## Patentansprüche

1. Ladevorrichtung (3) zum Laden von Elektrofahrzeugen, umfassend:
- mindestens eine Dockingstation (4),
- mindestens eine an der Dockingstation (4) befestigbare Ladeeinheit (6),
- mindestens einen Verriegelungsmechanismus eingerichtet zum Befestigen der Ladeeinheit (6) an der Dockingstation (4) durch Bewegen eines Verriegelungsmoduls (5) von einer geöffneten Position in eine Verriegelungsposition, derart, dass die Ladeeinheit (6) in der Verriegelungsposition an der Dockingstation (4) arretiert ist,
- wobei das Verriegelungsmodul (5) zum Bewegen des Verriegelungsmoduls einen außerhalb der Dockingstation (4) und der Ladeeinheit (6) befindlichen Teilbereich (11) aufweist, und
- mindestens ein Schutzgehäuse (69) eingerichtet zum Verdecken zumindest des Teilbereichs (11) des Verriegelungsmoduls (5) in einem befestigten Zustand des Schutzgehäuses (69).

2. Ladevorrichtung (3) nach Anspruch 1, **dadurch gekennzeichnet, dass**
- das Schutzgehäuse (69) mindestens einen Vorsprung (75) umfasst,
- die Ladeeinheit (6) und/oder die Dockingstation (4) mindestens ein zu dem Vorsprung (75) korrespondierende Ausnehmung umfasst, und
- in dem befestigten Zustand des Schutzgehäuses (69) der mindestens eine Vorsprung (75) zumindest teilweise in der mindestens einen Ausnehmung eingesetzt ist.

3. Ladevorrichtung (3) nach Anspruch 1 oder 2, **dadurch gekennzeichnet, dass**
- die Ladevorrichtung (3) mindestens ein Sperrteil (81) umfasst, welches in einem montierten Zustand positionsunveränderlich angeordnet ist zumindest in Bezug zu der Dockingstation (4),
- wobei das Sperrteil (81) ein erstes Sperrelement (83) umfasst, und
- das Schutzgehäuse (69) ein zweites zu dem ersten Sperrelement (83) korrespondierendes Sperrelement (93) umfasst,
- wobei das zweite Sperrelement (93) und das erste Sperrelement (83) in einem geschlossenen Zustand der Sperrelemente (83, 93) zusammenwirken, derart, dass ein Bewegen des Schutzgehäuses (69) blockiert ist.

4. Ladevorrichtung (3) nach Anspruch 3, **dadurch gekennzeichnet, dass**
- das erste Sperrelement (83) und das zweite Sperrelement (93) einen Schlossmechanismus (71) bilden, und
- das erste Sperrelement (83) und/oder das zweite Sperrelement (93) durch mindestens einen Schlüssel zwischen einer aufgeschlossenen Position und einer verschlossenen Position bewegbar sind, wobei sich das erste Sperrelement (83) und das zweite Sperrelement (93) in der verschlossenen Position in dem geschlossenen Zustand befinden.

5. Ladevorrichtung (3) nach Anspruch 3 oder 4, **dadurch gekennzeichnet, dass**
- das erste Sperrelement (83) mindestens eine Sperraufnahme (91) aufweist, und
- das zweite Sperrelement (93) einen bewegbarer Sperrzapfen (93) aufweist, eingerichtet zum Eingreifen in die Sperraufnahme (91) in dem geschlossenen Zustand.

6. Ladevorrichtung (3) nach Anspruch 5, **dadurch gekennzeichnet, dass**
- mindestens eine erste Kante (87) des Sperrteils (81) Z-förmig gebildet ist, und
- das Schutzgehäuse (69) mindestens eine zweite zu der ersten Kante (87) korrespondierende Kante (79) aufweist, die insbesondere L-förmig gebildet ist,
- wobei die zweite Kante (79) die erste Kante (87) in dem befestigten Zustand des Schutzgehäuses (69) hintergreift.

7. Ladevorrichtung (3) nach einem der vorherigen Ansprüche, **dadurch gekennzeichnet, dass**
- das Schutzgehäuse (69) ein Anschlagelement (98),
- wobei das Anschlagselement (98) derart an einer Innenwand des Schutzgehäuses (69) angeordnet ist, dass in dem befestigten Zustand des Schutzgehäuses (69) ein Bewegen des Verriegelungsmoduls (5) in die geöffnete Position durch das Anschlagselement (98) blockiert ist.

8. Ladevorrichtung (3) nach einem der vorherigen Ansprüche, **dadurch gekennzeichnet, dass**
- in der Dockingstation (4) eine Mehrzahl von Ausnehmungen (16) vorgesehen sind,
- wobei die Ladeeinheit (6) eine Mehrzahl von in die Ausnehmungen (16) der Dockingstation (14) einführbaren Stegen (18) aufweist, die jeweils mindestens ein erstes Verriegelungselement (21, 23) aufweisen,
- wobei das zwischen der Verriegelungsposition und der geöffneten Position bewegbare Verriegelungsmodul (5) eine Mehrzahl von zweiten zu den ersten Verriegelungselementen (21, 23) korrespondierenden Verriegelungselementen (13) aufweist,
- wobei in der geöffneten Position des Verriegelungsmoduls (5) die Stege (18) derart in die Ausnehmungen (16) einführbar sind, dass die Stege (18) in eine Verrastposition bewegbar sind, und
- wobei in der Verrastposition das Verriegelungsmodul (5) von der geöffneten Position in die geschlossene Position bewegbar ist, derart, dass durch eine Zusammenwirkung der zweiten Verriegelungselemente (13) mit den ersten Verriegelungselementen (21, 23) die Stege (18) formschlüssig an der Dockingstation (4) fixierbar sind

9. Ladevorrichtung (3) nach einem der vorherigen Ansprüche, **dadurch gekennzeichnet, dass**
- die Ladeeinheit (6) mindestens eine Wannenbaugruppe (20) umfasst,
- wobei die Stege (18) bodenseitig an der Wannenbaugruppe (20) angeordnet sind und sich vom Inneren der Wannenbaugruppe (20) weg weisend erstrecken.

10. Ladevorrichtung (3) nach einem der vorherigen Ansprüche, **dadurch gekennzeichnet, dass**
- das Verriegelungsmodul (5) als Verriegelungsbügel (5) mit zwei im Wesentlichen parallel zu einander verlaufenden Schenkeln (7, 9) und ein die Schenkel (7, 9) verbindendes Verbindungselement (11) gebildet ist,
- wobei das Verbindungselement (11) zumindest teilweise den Griffbereich (11) bildest, und
- wobei jeder Schenkel (7, 9) mindestens ein zweites Verriegelungselement (13) aufweist.

11. Ladevorrichtung (3) nach einem der vorherigen Ansprüche, **dadurch gekennzeichnet, dass**
- ein Steg (18) einen Zapfenabschnitt (23) mit einem Verriegelungskopf (21) als erstes Verriegelungselement (21, 23) aufweist,
- wobei in der Verrastposition durch eine Bewegung des Verriegelungsmoduls (5) von der geöffneten Position in die Verriegelungsposition ein Hintergreifen des Verriegelungskopfes (23) durch eine als zweites Verriegelungselement (13) gebildete Ausnehmung (13) des Verriegelungsmoduls (5) erfolgt,
und/oder
- das Verriegelungsmodul (5) von der geöffneten Position in die Verriegelungsposition nur bewegbar ist, wenn sämtliche Stege (18) in der Verrastposition sind.

12. Ladevorrichtung (3) nach einem der vorherigen Ansprüche, **dadurch gekennzeichnet, dass**
- das Verriegelungsmodul (5) von der geöffneten Position in eine Verriegelungszwischenposition bewegbar ist, wenn mindestens ein erster Steg (18a) in der Verrastposition ist, und
- das Verriegelungsmodul (5) von der Verriegelungszwischenposition in die Verriegelungsposition bewegbar ist, wenn mindestens ein zweiter Steg (18b) in der Verrastposition ist,
und/oder
- das Verriegelungsmodul (5) in der Dockingstation (4) fest integriert ist, und
- die Dockingstation (4) mindestens eine Führung (57, 59) aufweist, eingerichtet zum Führen des Verriegelungsmoduls (5) während einer Bewegung zwischen der geöffneten Position und der geschlossenen Position.

13. Ladevorrichtung (3) nach einem der vorherigen Ansprüche, **dadurch gekennzeichnet, dass**
- zwischen dem Verriegelungsmodul (5) und der Dockingstation (4) mindestens ein Federelement (63) befestigt ist, derart, dass in der geöffneten Position eine in Richtung der Verriegelungsposition wirkende Kraft auf das Verriegelungsmodul (5) durch das Federelement (63) ausgeübt wird.

14. Ladevorrichtung (3) nach einem der vorherigen Ansprüche, **dadurch gekennzeichnet, dass**
- mindestens ein Fixierungselement (67) vorgesehen ist, eingerichtet zum Fixieren des Verriegelungsmoduls (5) in der Verriegelungsposition derart, dass ein Bewegen des Verriegelungsmoduls (5) bei einer Fixierung des Fixierungselements (67) blockiert wird.

15. Ladeanordnung (2), umfassend:
- ein Trägerelement (2a), und
- mindestens ein an dem Trägerelement (2a) befestigte Ladevorrichtung (3) nach einem der vorherigen Ansprüche.
